(19) Europäisches Patentamt
European Patent Office
Office européen des brevets

(11) EP 4 141 068 B1

(12) **EUROPEAN PATENT SPECIFICATION**

(45) Date of publication and mention of the grant of the patent:
**29.05.2024 Bulletin 2024/22**

(21) Application number: **21194160.4**

(22) Date of filing: **31.08.2021**

(51) International Patent Classification (IPC):
***C08L 23/14*** *(2006.01)* ***C08F 210/16*** *(2006.01)*
***C08F 210/06*** *(2006.01)*

(52) Cooperative Patent Classification (CPC):
(C-Sets available)
**C08F 210/16; C08F 210/06; C08L 23/14;**
C08L 2203/16; C08L 2203/30; C08L 2205/025;
C08L 2205/24; C08L 2314/02; C08L 2314/06;
Y02W 30/62 (Cont.)

# (54) A HOMOPOLYMER-RANDOM COPOLYMER BLEND HAVING A BENEFICIAL BALANCE OF OPTICAL AND MECHANICAL PROPERTIES

HOMOPOLYMERE RANDOM-COPOLYMER-MISCHUNG MIT EINEM VORTEILHAFTEN GLEICHGEWICHT AN OPTISCHEN UND MECHANISCHEN EIGENSCHAFTEN

MÉLANGE DE COPOLYMÈRE STATISTIQUE HOMOPOLYMÈRE AYANT UN ÉQUILIBRE BÉNÉFIQUE DE PROPRIÉTÉS OPTIQUES ET MÉCANIQUES

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(43) Date of publication of application:
**01.03.2023 Bulletin 2023/09**

(73) Proprietor: **Borealis AG**
**1020 Vienna (AT)**

(72) Inventors:
- **WANG, Jingbo**
  **4021 Linz (AT)**
- **GAHLEITNER, Markus**
  **4021 Linz (AT)**
- **BERNREITNER, Klaus**
  **4021 Linz (AT)**
- **LESKINEN, Pauli**
  **06101 Porvoo (FI)**

(74) Representative: **Maiwald GmbH**
**Elisenhof**
**Elisenstraße 3**
**80335 München (DE)**

(56) References cited:
**EP-A1- 2 535 372** **EP-A1- 2 746 336**
**WO-A1-2020/104145** **US-A1- 2021 054 181**

EP 4 141 068 B1

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

(52) Cooperative Patent Classification (CPC): (Cont.)

C-Sets
**C08F 210/06, C08F 2/001;**
**C08F 210/06, C08F 4/65927;**
**C08L 23/14, C08L 23/12, C08K 5/0083;**
C08F 210/06, C08F 210/14, C08F 2500/12, C08F 2500/15, C08F 2500/27, C08F 2500/33, C08F 2500/34, C08F 2500/35;
C08F 210/06, C08F 210/16, C08F 2500/12, C08F 2500/15, C08F 2500/27, C08F 2500/33, C08F 2500/34, C08F 2500/35

## Description

The present invention is directed to a monophasic polypropylene composition that comprises a major amount of a random copolymer of propylene having a certain content of 2,1-regiodefects and a minor amount of a propylene homopolymer composition being free of 2,1-regiodefects, in addition to articles comprising between 90 and 100 wt.-% of the monophasic polypropylene composition.

## Background to the Invention

Polymers are increasingly consumed in large amounts in a wide range of applications, including packaging for food and other goods, fibres, automotive components, and a great variety of manufactured articles.

In particular, polystyrene has long been used for thermoforming applications (e.g. cups and trays), due to the beneficial balance of mechanical and optical properties. Although highly suitable for the end use, these polystyrene-based items are difficult to recycle. The major components of post-consumer polymer waste are polypropylene and polyethylene, which are known to be immiscible with polystyrene, meaning that the addition of even small amounts of polystyrene into recycled blends that primarily comprise polypropylene and/or polyethylene can have deleterious consequences for the homogeneity of the blend, and thus the mechanical and optical properties thereof.

Polypropylene based materials offer significant potential for mechanical recycling, as these materials are extensively used in packaging. Taking into account the huge amount of waste collected compared to the amount of waste recycled back into the stream, there is still a great potential for intelligent reuse of plastic waste streams and for mechanical recycling of plastic wastes.

The provision of polypropylene grades having a suitable balance of mechanical and optical properties for thermoforming applications would therefore allow for easier recycling of articles containing such polypropylene grades without risking contamination of existing polyolefin recycling processes EP 2 535 372 A1 for instance describes a polypropylene composition having a suitable balance of mechanical and optical properties for packaging applications.

In particular, it is known in the art that the haze of a polypropylene composition may be reduced through the incorporation of higher amounts of ethylene/alpha olefin comonomers; however, this effect is generally accompanied by a decrease in the stiffness of the polypropylene composition. The development of polypropylene grades that exhibit an improved balance of stiffness and haze represents a significant development.

## Summary of the Invention

Accordingly, the present inventors have discovered that certain blends of single-site catalysed propylene random copolymers with Ziegler-Natta catalysed propylene homopolymers containing polymeric nucleating agents can achieve these ambitious requirements.

The present invention is thus directed to a monophasic polypropylene composition (PC), having a melt flow rate ($MFR_2$), measured according to ISO 1133 at 230 °C and 2.16 kg, in the range from 1.0 to 50.0 g/10 min, wherein the monophasic polypropylene composition (PC) comprises:

a) 55.0 to 95.0 wt.-%, relative to the total weight of the monophasic polypropylene composition (PC), of a random copolymer of propylene (R-PP) and at least one comonomer selected from ethylene and $C_4$ to $C_8$ alpha olefins, having a melt flow rate ($MFR_2$), measured according to ISO 1133 at 230 °C and 2.16 kg, in the range from 1.0 to 30.0 g/10 min, a comonomer content, as determined by quantitative $^{13}C$-NMR spectroscopy, in the range from 0.5 to 6.0 mol-%, and a content of 2,1-regiodefects as determined by $^{13}C$-NMR spectroscopy in the range from 0.1 to 1.4 mol-%; and

b) 5.0 to 45.0 wt.-%, relative to the total weight of the monophasic polypropylene composition (PC), of a propylene homopolymer composition (H-PP), comprising a reactor blend of a propylene homopolymer and a polymeric nucleating agent that is present in an amount of from 20 to 300 wt-ppm, relative to the total weight of the propylene homopolymer composition (H-PP), wherein the propylene homopolymer composition (H-PP) has a melt flow rate ($MFR_2$), measured according to ISO 1133 at 230 °C and 2.16 kg, in the range from 10 to 100 g/10 min and is free from 2,1-regiodefects as determined by $^{13}C$-NMR spectroscopy;

wherein the combined weight of the random copolymer of propylene (R-PP) and the propylene homopolymer composition (H-PP) is at least 95 wt.-%, relative to the total weight of the monophasic polypropylene composition (PC), and the polymeric nucleating agent comprises a monomer (I) of the general formula

$$H_2C=CH-CHR^1R^2 \qquad (I)$$

wherein $R^1$ and $R^2$ are either individual alkyl groups with one or more carbon atoms or form an optionally substituted saturated, unsaturated or aromatic ring or a fused ring system containing 4 to 20 carbon atoms.

The present invention is furthermore directed to an article comprising the monophasic polypropylene composition (PC) according to any one of the preceding claims in an amount in the range from 90 to 100 wt.-%, more preferably in the range from 95 to 100 wt.-%, yet more preferably in the range from 98 to 100 wt.-%, wherein the article is preferably selected from a injection moulded article, a thermoformed article or a film.

**Definitions**

Unless defined otherwise, all technical and scientific terms used herein have the same meaning as commonly understood by one of ordinary skill in the art to which the invention pertains. Although, any methods and materials similar or equivalent to those described herein can be used in practice for testing of the present invention, the preferred materials and methods are described herein. In describing and claiming the present invention, the following terminology will be used in accordance with the definitions set out below.

Unless clearly indicated otherwise, use of the terms "a," "an," and the like refers to one or more.

According to the present invention, the expression "propylene homopolymer" relates to a polypropylene that consists substantially, i.e. of at least 99.5 mol-%, more preferably of at least 99.8 mol-%, like of at least 99.9 mol-%, of propylene units. In another embodiment, only propylene units are detectable, i.e. only propylene has been polymerized.

A propylene random copolymer is a copolymer of propylene monomer units and comonomer units, preferably selected from ethylene and C4-C12 alpha-olefins, in which the comonomer units are distributed randomly over the polymeric chain. The propylene random copolymer can comprise comonomer units from one or more comonomers different in their amounts of carbon atoms. In the following amounts are given in mol-% unless it is stated otherwise. A propylene random copolymer must contain at least 50 mol-% propylene units.

Typical for propylene homopolymers and propylene random copolymers is the presence of only one glass transition temperature.

**Detailed Description of the Invention**

**Random copolymer of propylene (R-PP)**

The major component present in the monophasic polypropylene composition (PC) of the invention is a random copolymer of propylene (R-PP) and at least one comonomer selected from ethylene and $C_4$ to $C_8$ alpha olefins.

The random copolymer of propylene (R-PP) has a melt flow rate ($MFR_2$), measured according to ISO 1133 at 230 °C and 2.16 kg, in the range from 1.0 to 30.0 g/10 min, more preferably in the range from 3.0 to 20.0 g/10 min, most preferably in the range from 5.0 to 10.0 g/10 min.

The random copolymer of propylene (R-PP) preferably has a xylene cold soluble content (XCS), as determined at 25 °C according to ISO 16152, in the range of 0.5 to 15.0 wt.-%, more preferably in the range from 0.6 to 8.0 wt.-%, most preferably in the range from 0.7 to 3.0 wt.-%

The random copolymer of propylene (R-PP) is preferably polymerized in the presence of a single site catalyst (SSC).

The presence of 2,1-regiodefects is a key indicator that a propylene polymer has been polymerized in the presence of a single site catalyst. Consequently, it is required that the random copolymer of propylene (R-PP) has a content of 2,1-regiodefects as determined by $^{13}$C-NMR spectroscopy in the range from 0.1 to 1.4 mol-%, more preferably in the range from 0.2 to 1.0 mol-%, most preferably in the range from 0.3 to 0.7 mol-%.

The random copolymer of propylene (R-PP) preferably has a melting temperature $T_m$ in the range from 132 to 144 °C, more preferably in the range from 134 to 142 °C, most preferably in the range from 136 to 140 °C.

The random copolymer of propylene (R-PP) preferably has a crystallisation temperature $T_c$ in the range from 95 to 105 °C, more preferably in the range from 97 to 103 °C, most preferably in the range from 98 to 102 °C.

Both $T_m$ and $T_c$ are determined by differential scanning calorimetry (DSC) according to ISO 11357 / part 3 / method C2 in a heat / cool / heat cycle with a scan rate of 10 °C/min in the temperature range of -30 to +225 °C.

The random copolymer of propylene (R-PP) preferably has a glass transition temperature $T_g$, determined by dynamic mechanical analysis according to ISO 6721-7, in the range from -20 to 10 °C, more preferably in the range from -10 to 5 °C, most preferably in the range from -8 to 0 °C. Since the polypropylene composition is monophasic, the same must be true for the random copolymer of propylene (R-PP). It is thus preferred that the glass transition temperature Tg as described above is the only measurable glass transition temperature.

The random copolymer of propylene (R-PP) preferably has a number average molecular weight (Mn), determined by Gel Permeation Chromatography, in the range from 60,000 to 100,000 g/mol, more preferably in the range

from 65,000 to 95,000 g/mol, most preferably in the range from 70,000 to 90,000 g/mol.

The random copolymer of propylene (R-PP) preferably has a weight average molecular weight (Mw), determined by Gel Permeation Chromatography (GPC), in the range from 170,000 to 310,000 g/mol, more preferably in the range from 190,000 to 290,000 g/mol, most preferably in the range from 210,000 to 270,000 g/mol.

The random copolymer of propylene (R-PP) preferably has a molecular weight distribution (Mw/Mn), determined by Gel Permeation Chromatography (GPC), in the range from 2.0 to 5.0, more preferably in the range from 2.2 to 4.5, most preferably in the range from 2.5 to 4.0.

The random copolymer of propylene (R-PP) has a comonomer content, as determined by quantitative $^{13}C$-NMR spectroscopy, in the range from 0.5 to 6.0 mol-%, more preferably in the range from 0.8 to 5.0 mol-%, most preferably in the range from 1.1 to 4.0 mol-%.

The comonomer is selected from ethylene and $C_4$ to $C_8$ alpha olefins.

In one embodiment, the random copolymer of propylene (R-PP) is a propylene ethylene random copolymer.

The ethylene content of the propylene-ethylene random copolymer, as determined by quantitative $^{13}C$-NMR spectroscopy, is in the range from 2.0 to 6.0 mol-%, more preferably in the range from 2.5 to 5.0 mol-%, most preferably in the range from 3.0 to 4.0 mol-%

It is further preferred that the propylene-ethylene random copolymer comprises:

a) 51.0 to 75.0 wt.-%, relative to the total weight of the propylene-ethylene random copolymer, of a first propylene-ethylene random copolymer fraction (R-PP1); and
b) 25.0 to 49.0 wt.-%, relative to the total weight of the propylene-ethylene random copolymer, of a second propylene-ethylene random copolymer fraction (R-PP2).

It is yet further preferred that the propylene-ethylene random copolymer comprises:

a) 53.0 to 70.0 wt.-%, relative to the total weight of the propylene-ethylene random copolymer, of a first propylene-ethylene random copolymer fraction (R-PP1); and
b) 30.0 to 47.0 wt.-%, relative to the total weight of the propylene-ethylene random copolymer, of a second propylene-ethylene random copolymer fraction (R-PP2).

It is still further preferred that the propylene-ethylene random copolymer comprises:

a) 55.0 to 65.0 wt.-%, relative to the total weight of the propylene-ethylene random copolymer, of a first propylene-ethylene random copolymer fraction (R-PP1); and
b) 35.0 to 45.0 wt.-%, relative to the total weight of the propylene-ethylene random copolymer, of a second propylene-ethylene random copolymer fraction (R-PP2).

The combined weight of the first and second propylene-ethylene random copolymer fractions (R-PP1+R-PP2) is at least 95 wt.-%, relative to the total weight of the propylene-ethylene random copolymer (R-PP).

The first propylene-ethylene random copolymer fraction (R-PP1) has an ethylene content, as determined by quantitative $^{13}C$-NMR spectroscopy, in the range from 2.0 to 4.0 mol-%, more preferably in the range from 2.4 to 3.6 mol-%, most preferably in the range from 2.7 to 3.3 mol-%.

The second propylene-ethylene random copolymer fraction (R-PP2) has an ethylene content, as determined by quantitative $^{13}C$-NMR spectroscopy, in the range from 3.0 to 7.0 mol-%, more preferably in the range from 4.0 to 6.0 mol-%, most preferably in the range from 4.5 to 5.5 mol-%.

The ratio of the ethylene content of the propylene-ethylene random copolymer to the ethylene content of the first propylene-ethylene random copolymer fraction, [C2(R-PP)]/[C2(R-PP1)], is preferably in the range from 1.10 to 2.00, more preferably in the range from 1.15 to 1.70, most preferably in the range from 120 to 1.40.

In an alternative embodiment, the random copolymer of propylene (R-PP) is a random copolymer of propylene and a comonomer selected from $C_4$ to $C_8$ alpha olefins (hereafter termed a propylene-alpha olefin random copolymer), more preferably a random copolymer of propylene and 1-hexene (hereafter termed a propylene-hexene random copolymer).

The comonomer content of the propylene-alpha olefin random copolymer, as determined by quantitative $^{13}C$-NMR spectroscopy, more preferably the 1-hexene content of the propylene-hexene random copolymer, is in the range from 0.5 to 3.0 mol-%, more preferably in the range from 0.8 to 2.0 mol-%, most preferably in the range from 1.0 to 1.5 mol-%.

It is further preferred that the propylene-alpha olefin random copolymer, more preferably the propylene-hexene random copolymer, comprises:

a) 25.0 to 45.0 wt.-%, relative to the total weight of the propylene random copolymer, of a first propylene random copolymer fraction (R-PP1); and
b) 55.0 to 75.0 wt.-%, relative to the total weight of the propylene random copolymer, of a second propylene random copolymer fraction (R-PP2).

It is yet further preferred that the propylene-alpha olefin random copolymer, more preferably the propylene-hexene random copolymer, comprises:

a) 30.0 to 43.0 wt.-%, relative to the total weight of the propylene random copolymer, of a first propylene random copolymer fraction (R-PP1); and
b) 57.0 to 70.0 wt.-%, relative to the total weight of the propylene random copolymer, of a second propylene random copolymer fraction (R-PP2).

It is still further preferred that the propylene-alpha olefin random copolymer, more preferably the propylene-hexene random copolymer, comprises:

a) 35.0 to 41.0 wt.-%, relative to the total weight of the propylene random copolymer, of a first propylene random copolymer fraction (R-PP1); and
b) 59.0 to 65.0 wt.-%, relative to the total weight of the propylene random copolymer, of a second propylene random copolymer fraction (R-PP2).

The combined weight of the first and second propylene random copolymer fractions (R-PP1+R-PP2) is at least 95 wt.-%, relative to the total weight of the propylene-alpha olefin random copolymer (R-PP), more preferably the propylene-hexene random copolymer (R-PP).
The first propylene random copolymer fraction (R-PP1) has a comonomer content, more preferably a 1-hexene content, as determined by quantitative $^{13}C$-NMR spectroscopy, in the range from 0.1 to 1.0 mol-%, more preferably in the range from 0.3 to 0.9 mol-%, most preferably in the range from 0.5 to 0.8 mol-%.
The second propylene random copolymer fraction (R-PP2) has a comonomer content, more preferably a 1-hexene content, as determined by quantitative $^{13}C$-NMR spectroscopy, in the range from 1.0 to 4.0 mol-%, more preferably in the range from 1.3 to 3.0 mol-%, most preferably in the range from 1.5 to 2.0 mol-%.
The ratio of the comonomer content of the propylene-alpha olefin random copolymer to the comonomer content of the first propylene random copolymer fraction, [C(R-PP)]/[C(R-PP1)], is preferably in the range from 1.5 to 3.0, more preferably in the range from 1.8 to 2.7, most preferably in the range from 2.0 to 2.5.
More preferably, the ratio of the 1-hexene content of the propylene-hexene random copolymer to the comonomer content of the first propylene random copolymer fraction, [C(R-PP)]/[C(R-PP1)], is preferably in the range from 1.5 to 3.0, more preferably in the range from 1.8 to 2.7, most preferably in the range from 2.0 to 2.5.

**Process for producing the random copolymer of propylene (R-PP)**

The process for the preparation of the random copolymer of propylene (R-PP) as well as the single site catalyst (SSC) are further described in detail below.
As already indicated above, the random copolymer of propylene (R-PP) is preferably produced in a sequential polymerization process.
The term "sequential polymerization system" indicates that the random copolymer of propylene (R-PP) is produced in at least two reactors connected in series. Accordingly, the present polymerization system comprises at least a first polymerization reactor (R1) and a second polymerization reactor (R2), and optionally a third polymerization reactor (R3). The term "polymerization reactor" shall indicate that the main polymerization takes place. Thus, in case the process consists of two polymerization reactors, this definition does not exclude the option that the overall system comprises for instance a pre-polymerization step in a pre-polymerization reactor. The term "consist of" is only a closing formulation in view of the main polymerization reactors.
Preferably, at least one of the two polymerization reactors (R1) and (R2) is a gas phase reactor (GPR). Still more preferably, the second polymerization reactor (R2) and the optional third polymerization reactor (R3) are gas phase reactors (GPRs), i.e. a first gas phase reactor (GPR1) and a second gas phase reactor (GPR2). A gas phase reactor (GPR) according to this invention is preferably a fluidized bed reactor, a fast fluidized bed reactor or a settled bed reactor or any combination thereof.
Accordingly, the first polymerization reactor (R1) is preferably a slurry reactor (SR) and can be any continuous or simple stirred batch tank reactor or loop reactor operating in bulk or slurry. Bulk means a polymerization in a reaction medium that comprises of at least 60 % (w/w) monomer. According to the present invention, the slurry reactor (SR) is

preferably a (bulk) loop reactor (LR). Accordingly the average concentration of the first fraction (1st F) of the random copolymer of propylene (R-PP) (i.e. the first random propylene copolymer fraction (R-PP1)), in the polymer slurry within the loop reactor (LR) is typically from 15 wt.-% to 55 wt.-%, based on the total weight of the polymer slurry within the loop reactor (LR). In one preferred embodiment of the present invention the average concentration of the first propylene random copolymer fraction (R-PP1) in the polymer slurry within the loop reactor (LR) is from 20 wt.-% to 55 wt.-% and more preferably from 25 wt.-% to 52 wt.-%, based on the total weight of the polymer slurry within the loop reactor (LR).

Preferably the propylene random copolymer of the first polymerization reactor (R1), i.e. the first propylene random copolymer fraction (R-PP1), more preferably the polymer slurry of the loop reactor (LR) containing the first propylene random copolymer fraction (R-PP1), is directly fed into the second polymerization reactor (R2), i.e. into the (first) gas phase reactor (GPR1), without a flash step between the stages. This kind of direct feed is described in EP 887379 A, EP 887380 A, EP 887381 A and EP 991684 A. By "direct feed" is meant a process wherein the content of the first polymerization reactor (R1), i.e. of the loop reactor (LR), the polymer slurry comprising the first propylene random copolymer fraction (R-PP1), is led directly to the next stage gas phase reactor.

Alternatively, the propylene random copolymer of the first polymerization reactor (R1), i.e. the first propylene random copolymer fraction (R-PP1), more preferably polymer slurry of the loop reactor (LR) containing the first propylene random copolymer fraction (R-PP1), may be also directed into a flash step or through a further concentration step before fed into the second polymerization reactor (R2), i.e. into the gas phase reactor (GPR). Accordingly, this "indirect feed" refers to a process wherein the content of the first polymerization reactor (R1), of the loop reactor (LR), i.e. the polymer slurry, is fed into the second polymerization reactor (R2), into the (first) gas phase reactor (GPR1), via a reaction medium separation unit and the reaction medium as a gas from the separation unit.

More specifically, the second polymerization reactor (R2), and any subsequent reactor, for instance the third polymerization reactor (R3), are preferably gas phase reactors (GPRs). Such gas phase reactors (GPR) can be any mechanically mixed or fluid bed reactors. Preferably, the gas phase reactors (GPRs) comprise a mechanically agitated fluid bed reactor with gas velocities of at least 0.2 m/sec. It is thus appreciated that the gas phase reactor is a fluidized bed type reactor, optionally with a mechanical stirrer.

Thus, in a preferred embodiment the first polymerization reactor (R1) is a slurry reactor (SR), like loop reactor (LR), whereas the second polymerization reactor (R2) and any optional subsequent reactor, like the third polymerization reactor (R3), are gas phase reactors (GPRs). Accordingly for the instant process at least two, preferably two polymerization reactors (R1) and (R2) or three polymerization reactors (R1), (R2) and (R3), namely a slurry reactor (SR), like loop reactor (LR) and a (first) gas phase reactor (GPR1) and optionally a second gas phase reactor (GPR2), connected in series are used. If needed prior to the slurry reactor (SR) a pre-polymerization reactor is placed.

The single site catalyst (SSC) is fed into the first polymerization reactor (R1) and is transferred with the polymer (slurry) obtained in the first polymerization reactor (R1) into the subsequent reactors. If the process covers also a pre-polymerization step, it is preferred that all of the single site catalyst (SSC) is fed in the pre-polymerization reactor. Subsequently the pre-polymerization product containing the single site catalyst (SSC) is transferred into the first polymerization reactor (R1).

A preferred multistage process is a "loop-gas phase"-process, such as developed by Borealis A/S, Denmark (known as BORSTAR® technology) described e.g. in patent literature, such as in EP 0 887 379, WO 92/12182 WO 2004/000899, WO 2004/111095, WO 99/24478, WO 99/24479 or in WO 00/68315.

A further suitable slurry-gas phase process is the Spheripol® process of LyondellBasell Industries.

Especially good results are achieved in case the temperature in the reactors is carefully chosen.

Accordingly it is preferred that the operating temperature in the first polymerization reactor (R1) is in the range from 62 to 85 °C, more preferably in the range from 65 to 82 °C, still more preferably in the range from 67 to 80 °C.

Alternatively or additionally to the previous paragraph it is preferred that the operating temperature in the second polymerization reactor (R2) and optional in the third reactor (R3) is in the range from 75 to 95 °C, more preferably in the range from 78 to 92 °C.

Preferably, the operating temperature in the second polymerization reactor (R2) is equal to or higher than the operating temperature in the first polymerization reactor (R1). Accordingly it is preferred that the operating temperature

(a) in the first polymerization reactor (R1) is in the range from 62 to 85 °C, more preferably in the range from 65 to 82 °C, still more preferably in the range from 67 to 80 °C, like 70 to 80 °C;
and
(b) in the second polymerization reactor (R2) is in the range from 62 to 95 °C, more preferably in the range from 65 to 92 °C, still more preferably in the range from 67 to 88 °C,

with the proviso that the operating temperature in the in the second polymerization reactor (R2) is equal or higher to the operating temperature in the first polymerization reactor (R1).

Typically, the pressure in the first polymerization reactor (R1), preferably in the loop reactor (LR), is in the range

from 20 to 80 bar, preferably 30 to 70 bar, like 35 to 65 bar, whereas the pressure in the second polymerization reactor (R2), i.e. in the (first) gas phase reactor (GPR1), and optionally in any subsequent reactor, like in the third polymerization reactor (R3), e.g. in the second gas phase reactor (GPR2), is in the range from 5 to 50 bar, preferably 15 to 40 bar.

Preferably hydrogen is added in each polymerization reactor in order to control the molecular weight, i.e. the melt flow rate $MFR_2$.

Preferably, the average residence time is rather long in the polymerization reactors (R1) and (R2). In general, the average residence time ($\tau$) is defined as the ratio of the reaction volume ($V_R$) to the volumetric outflow rate from the reactor ($Q_o$) (i.e. $V_R/Q_o$), i.e $\tau = V_R/Q_o$ [tau = $V_R/Q_o$]. In case of a loop reactor the reaction volume ($V_R$) equals to the reactor volume.

Accordingly, the average residence time ($\tau$) in the first polymerization reactor (R1) is preferably at least 15 min, more preferably in the range from 15 to 80 min, still more preferably in the range from 20 to 60 min, like in the range from 24 to 50 min, and/or the average residence time ($\tau$) in the second polymerization reactor (R2) is preferably at least 70 min, more preferably in the range from 70 to 220 min, still more preferably in the range from 80 to 210 min, yet more preferably in the range from 90 to 200 min, like in the range from 90 to 190 min. Preferably the average residence time ($\tau$) in the third polymerization reactor (R3) - if present - is preferably at least 30 min, more preferably in the range from 30 to 120 min, still more preferably in the range from 40 to 100 min, like in the range from 50 to 90 min.

As mentioned above the preparation of the propylene random copolymer can comprise in addition to the (main) polymerization of the propylene random copolymr in the at least two polymerization reactors (R1, R3 and optional R3) prior thereto a pre-polymerization in a pre-polymerization reactor (PR) upstream to the first polymerization reactor (R1).

In the pre-polymerization reactor (PR) a polypropylene (Pre-PP) is produced. The pre-polymerization is conducted in the presence of the single site catalyst (SSC). According to this embodiment, the single site catalyst is introduced to the pre-polymerization step. However, this shall not exclude the option that at a later stage for instance further co-catalyst is added in the polymerization process, for instance in the first reactor (R1). In one embodiment, all components of the single site catalyst are only added in the pre-polymerization reactor (PR), if a pre-polymerization is applied.

The pre-polymerization reaction is typically conducted at a temperature of 0 to 60 °C, preferably from 15 to 50 °C, and more preferably from 20 to 45 °C.

The pressure in the pre-polymerization reactor is not critical but must be sufficiently high to maintain the reaction mixture in liquid phase. Thus, the pressure may be from 20 to 100 bar, for example 30 to 70 bar.

In a preferred embodiment, the pre-polymerization is conducted as bulk slurry polymerization in liquid propylene, i.e. the liquid phase mainly comprises propylene, with optionally inert components dissolved therein. Furthermore, according to the present invention, an ethylene feed is employed during pre-polymerization as mentioned above.

It is possible to add other components also to the pre-polymerization stage. Thus, hydrogen may be added into the pre-polymerization stage to control the molecular weight of the polypropylene (Pre-PP) as is known in the art. Further, antistatic additive may be used to prevent the particles from adhering to each other or to the walls of the reactor.

The precise control of the pre-polymerization conditions and reaction parameters is within the skill of the art.

Due to the above defined process conditions in the pre-polymerization, preferably a mixture (MI) of the single site catalyst (SSC) and the polypropylene (Pre-PP) produced in the pre-polymerization reactor (PR) is obtained. Preferably the single site catalyst (SSC) is (finely) dispersed in the polypropylene (Pre-PP). In other words, the single site catalyst (SSC) particles introduced in the pre-polymerization reactor (PR) are split into smaller fragments that are evenly distributed within the growing polypropylene (Pre-PP). The sizes of the introduced single site catalyst (SSC) particles as well as of the obtained fragments are not of essential relevance for the instant invention and within the skilled knowledge.

As mentioned above, if a pre-polymerization is used, subsequent to said pre-polymerization, the mixture (MI) of the single site catalyst (SSC) and the polypropylene (Pre-PP) produced in the pre-polymerization reactor (PR) is transferred to the first reactor (R1). Typically the total amount of the polypropylene (Pre-PP) in the final propylene copolymer (R-PP) is rather low and typically not more than 5.0 wt.-%, more preferably not more than 4.0 wt.-%, still more preferably in the range from 0.5 to 4.0 wt.-%, like in the range 1.0 of to 3.0 wt.-%.

In case that pre-polymerization is not used, propylene and the other ingredients such as the single site catalyst (SSC) are directly introduced into the first polymerization reactor (R1).

Accordingly, the propylene random copolymer is preferably produced in a process comprising the following steps under the conditions set out above

(a) in the first polymerization reactor (R1), i.e. in a loop reactor (LR), propylene is polymerized obtaining a first propylene random copolymer fraction (R-PP1),

(b) transferring said first propylene random copolymer fraction (R-PP1) to a second polymerization reactor (R2),

(c) in the second polymerization reactor (R2) propylene is polymerized in the presence of the first propylene random copolymer fraction (R-PP1) obtaining a second propylene random copolymer fraction (R-PP2), said first propylene random copolymer fraction (R-PP1) and said second propylene random copolymer fraction (R-PP2) form the random copolymer of propylene (R-PP).

A pre-polymerization as described above can be accomplished prior to step (a).

As pointed out above, in the specific process for the preparation of the propylene random copolymer (R-PP) as defined above a single site catalyst (SSC) should be used. Accordingly, the single site catalyst (SSC) will be now described in more detail.

The single site catalyst according to the present invention may be any supported metallocene catalyst suitable for the production of highly isotactic polypropylene.

In a first embodiment, the single site catalyst (SSC) comprises a metallocene complex, a co-catalyst system comprising a boron-containing co-catalyst and/or aluminoxane co-catalyst, and a silica support.

In particular, it is preferred that the single site catalyst (SSC) of the first embodiment comprises

(i) a metallocene complex of the general formula (II)

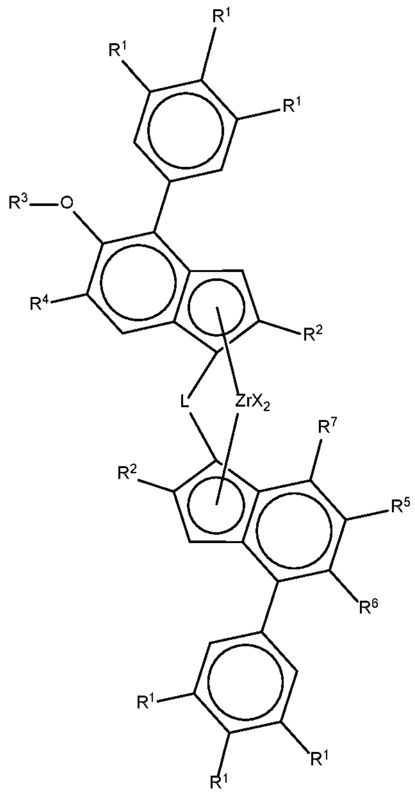

Formula (II)

wherein each X independently is a sigma-donor ligand,

L is a divalent bridge selected from -R'$_2$C-, -R'$_2$C-CR'$_2$-, -R'$_2$Si-, -R'$_2$Si-SiR'$_2$-, -R'$_2$Ge-, wherein each R' is independently a hydrogen atom or a $C_1$-$C_{20}$-hydrocarbyl group optionally containing one or more heteroatoms from groups 14-16 of the periodic table or fluorine atoms, or

optionally two R' groups taken together can form a ring,

each $R^1$ are independently the same or can be different and are hydrogen, a linear or branched $C_1$-$C_6$-alkyl group, a $C_{7-20}$-arylalkyl, $C_{7-20}$-alkylaryl group or $C_{6-20}$-aryl group or an OY group, wherein Y is a $C_{1-10}$-hydrocarbyl group, and optionally two adjacent $R^1$ groups can be part of a ring including the phenyl carbons to which they are bonded,

each $R^2$ independently are the same or can be different and are a $CH_2$-$R^8$ group, with $R^8$ being H or linear or branched $C_{1-6}$-alkyl group, $C_{3-8}$-cycloalkyl group, $C_{6-10}$-aryl group,

$R^3$ is a linear or branched $C_1$-$C_6$-alkyl group, $C_{7-20}$-arylalkyl, $C_{7-20}$-alkylaryl group or $C_6$-$C_{20}$-aryl group,

$R^4$ is a $C(R^9)_3$ group, with $R^9$ being a linear or branched $C_1$-$C_6$-alkyl group,

$R^5$ is hydrogen or an aliphatic $C_1$-$C_{20}$-hydrocarbyl group optionally containing one or more heteroatoms from groups 14-16 of the periodic table;

$R^6$ is hydrogen or an aliphatic $C_1$-$C_{20}$-hydrocarbyl group optionally containing one or more heteroatoms from groups 14-16 of the periodic table; or

$R^5$ and $R^6$ can be taken together to form a 5 membered saturated carbon ring which is optionally substituted by n groups $R^{10}$, n being from 0 to 4;

each $R^{10}$ is same or different and may be a $C_1$-$C_{20}$-hydrocarbyl group, or a $C_1$-$C_{20}$-hydrocarbyl group optionally containing one or more heteroatoms belonging to groups 14-16 of the periodic table;
$R^7$ is H or a linear or branched $C_1$-$C_6$-alkyl group or an aryl or heteroaryl group having 6 to 20 carbon atoms optionally substituted by one to three groups $R^{11}$,
each $R^{11}$ are independently the same or can be different and are hydrogen, a linear or branched $C_1$-$C_6$-alkyl group, a $C_{7-20}$-arylalkyl, $C_{7-20}$-alkylaryl group or $C_{6-20}$-aryl group or an OY group, wherein Y is a $C_{1-10}$-hyrocarbyl group,

(ii) a co-catalyst system comprising a boron containing co-catalyst and/or an aluminoxane co-catalyst, and
(iii) a silica support.

The term "sigma-donor ligand" is well understood by the person skilled in the art, i.e. a group bound to the metal via a sigma bond. Thus the anionic ligands "X" can independently be halogen or be selected from the group consisting of R', OR', $SiR'_3$, $OSiR'_3$, $OSO_2CF_3$, OCOR', SR', $NR'_2$ or $PR'_2$ group wherein R' is independently hydrogen, a linear or branched, cyclic or acyclic, $C_1$ to $C_{20}$ alkyl, $C_2$ to $C_{20}$ alkenyl, $C_2$ to $C_{20}$ alkynyl, $C_3$ to $C_{12}$ cycloalkyl, $C_6$ to $C_{20}$ aryl, $C_7$ to $C_{20}$ arylalkyl, $C_7$ to $C_{20}$ alkylaryl, $C_8$ to $C_{20}$ arylalkenyl, in which the R' group can optionally contain one or more heteroatoms belonging to groups 14 to 16. In a preferred embodiment the anionic ligands "X" are identical and either halogen, like Cl, or methyl or benzyl.

A preferred monovalent anionic ligand is halogen, in particular chlorine (Cl).

More preferably, the metallocene catalyst has the formula (IIa)

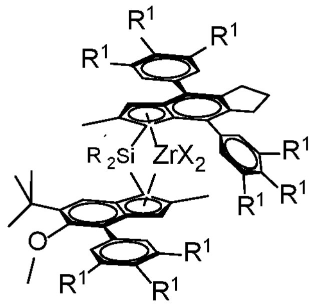

(IIa)

wherein each $R^1$ are independently the same or can be different and are hydrogen or a linear or branched $C_1$-$C_6$ alkyl group, whereby at least on $R^1$ per phenyl group is not hydrogen,
R' is a $C_1$-$C_{10}$ hydrocarbyl group, preferably a $C_1$-$C_4$ hydrocarbyl group and more preferably a methyl group and X independently is a hydrogen atom, a halogen atom, $C_1$-$C_6$ alkoxy group, $C_1$-$C_6$ alkyl group, phenyl or benzyl group.

Most preferably, X is chlorine, benzyl or a methyl group. Preferably, both X groups are the same. The most preferred options are two chlorides, two methyl or two benzyl groups, especially two chlorides.

Preferred complexes of the metallocene catalyst include:

rac-dimethylsilanediylbis[2-methyl-4-(3',5'-dimethylphenyl)-5-methoxy-6-tert-butylinden-1- yl] zirconium dichloride,
rac-anti-dimethylsilanediyl[2-methyl-4-(4'-tert-butylphenyl)-inden-1-yl] [2-methyl-4-(4' - tertbutylphenyl)-5-methoxy-6-tert-butylinden-1-yl] zirconium dichloride,
rac-anti-dimethylsilanediyl[2-methyl-4-(4'-tert-butylphenyl)-inden-1-yl][2-methyl-4-phenyl-5-methoxy-6-tert-butylinden-1-yl] zirconium dichloride,
rac-anti-dimethylsilanediyl[2-methyl-4-(3',5'-tert-butylphenyl)-1,5,6,7-tetrahydro-sindacen-1-yl][2-methyl-4-(3',5'-dimethyl-phenyl)-5-methoxy-6-tert-butylinden-1-yl] zirconium dichloride,
rac-anti-dimethylsilanediyl[2-methyl-4,8-bis-(4'-tert-butylphenyl)-1,5,6,7-tetrahydro-sindacen-1-yl][2-methyl-4-(3',5'-dimethyl-phenyl)-5-methoxy-6-tert-butylinden-1-yl] zirconium dichloride,
rac-anti-dimethylsilanediyl[2-methyl-4,8-bis-(3',5'-dimethylphenyl)-1,5,6,7-tetrahydro-s-indacen-1-yl] [2-methyl-4-(3',5'-dimethylphenyl)-5-methoxy-6-tert-butylinden-1-yl] zirconium dichloride,
rac-anti-dimethylsilanediyl[2-methyl-4,8-bis-(3',5'-dimethylphenyl)-1,5,6,7-tetrahydro-s-indacen-1-yl][2-methyl-4-(3',5'-5 ditert-butyl-phenyl)-5-methoxy-6-tert-butylinden-1-yl] zirconium dichloride.

Especially preferred is rac-anti-dimethylsilanediyl[2-methyl-4,8-bis-(3',5'-dimethylphenyl)-1,5,6,7-tetrahydro-s indacen-1-yl] [2-methyl-4-(3',5'-dimethylphenyl)-5-methoxy-6-tertbutylinden-1-yl] zirconium dichloride (VIIb)

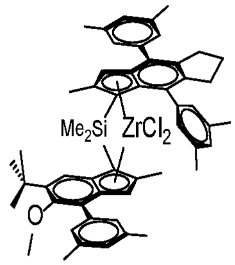

(IIb).

The ligands required to form the complexes and hence catalysts of the invention can be synthesised by any process and the skilled organic chemist would be able to devise various synthetic protocols for the manufacture of the necessary ligand materials. For Example WO2007/116034 discloses the necessary chemistry. Synthetic protocols can also generally be found in WO 2002/02576, WO 2011/135004, WO 2012/084961, WO 2012/001052, WO 2011/076780, WO 2015/158790 and WO 2018/122134. Especially reference is made to WO 2019/179959, in which the most preferred catalyst of the present invention is described.

The catalyst can be used in supported or unsupported form, preferably in supported form in the first embodiment. The particulate support material used is preferably an organic or inorganic material, such as silica, alumina or zirconia or a mixed oxide such as silica-alumina, in particular silica, alumina or silica-alumina. The use of a silica support is preferred. The person skilled in the art is aware of the procedures required to support a metallocene catalyst.

It is especially preferred that the support is a porous material so that the complex may be loaded into the pores of the support, e.g. using a process analogous to those described in WO94/14856 (Mobil), WO95/12622 (Borealis) and WO2006/097497.

The average particle size of the silica support can be typically from 10 to 100 μm. However, it has turned out that special advantages can be obtained if the support has a median particle size d50 from 15 to 80 μm, preferably from 18 to 50 μm.

The average pore size of the silica support can be in the range 10 to 100 nm and the pore volume from 1 to 3 mL/g.

Examples of suitable support materials are, for instance, ES757 produced and marketed by PQ Corporation, Sylopol 948 produced and marketed by Grace or SUNSPERA DM-L-303 silica produced by AGC Si-Tech Co. Supports can be optionally calcined prior to the use in catalyst preparation in order to reach optimal silanol group content.

The use of these supports is routine in the art.

In a second alternative embodiment, the single site catalyst (SSC) comprises a metallocene complex and a co-catalyst system comprising a boron-containing co-catalyst and/or aluminoxane co-catalyst..

In particular, it is preferred that the single site catalyst (SSC) of the second embodiment comprises:

(i) a complex of formula (III):

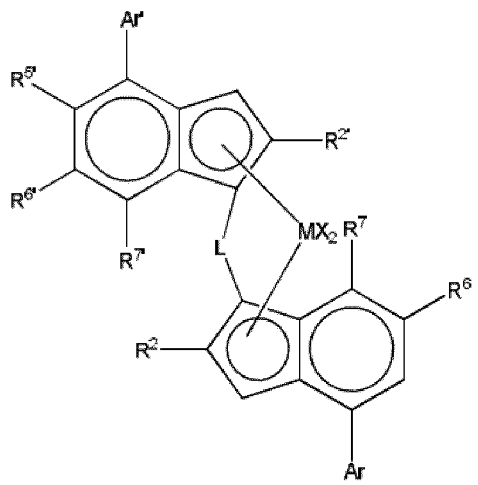

(III)

wherein

M is zirconium or hafnium;
each X is a sigma ligand;

L is a divalent bridge selected from -R'2C-, -R'2C-CR'2-, -R'2Si-, -R'2Si-SiR'2-, -R'2Ge-,
wherein each R' is independently a hydrogen atom, C1-C20-hydrocarbyl, tri(C1-C20- alkyl)silyl, C6-C20-aryl, C7-C20-arylalkyl or C7-C20-alkylaryl;
R2 and R2' are each independently a C1-C20 hydrocarbyl radical optionally containing one or more heteroatoms from groups 14-16;
R5' is a C1-20 hydrocarbyl group containing one or more heteroatoms from groups 14-16,optionally substituted by one or more halo atoms;
R6 and R6' are each independently hydrogen or a C1-20 hydrocarbyl group optionally containing one or more heteroatoms from groups 14-16; wherein R6' is preferably a tertiary alkyl group,
R7 is hydrogen or C1-20 hydrocarbyl group optionally containing one or more heteroatoms from groups 14-16;
R7' is hydrogen;
Ar is independently an aryl or heteroaryl group having up to 20 carbon atoms optionally substituted by one or more groups R1;
Ar' is independently an aryl or heteroaryl group having up to 20 carbon atoms optionally substituted by one or more groups R1;
each R1 is a C1-20 hydrocarbyl group or two R1 groups on adjacent carbon atoms taken together can form a fused 5 or 6 membered non aromatic ring with the Ar group, said ring being itself optionally substituted with one or more groups R4;
each R4 is a C1-20 hydrocarbyl group;
and

(ii) a cocatalyst comprising at least one or two compounds of a group 13 metal, e.g. Al and/or boron compound.

The catalyst used of the second embodiment is in solid particulate form. As mentioned above it can be supported on a conventional carrier know to an art skilled person. Preferably, the used catalyst is free from an external carrier.

Ideally, the catalyst is obtainable by a process in which (a) a liquid/liquid emulsion system is formed, said liquid/liquid emulsion system comprising a solution of the catalyst components (i) and (ii) dispersed in a solvent so as to form dispersed droplets; and (b) solid particles are formed by solidifying said dispersed droplets.

The term C1-20 hydrocarbyl group includes C1-20 alkyl, C2-20 alkenyl, C2-20 alkynyl, C3-20 cycloalkyl, C3-20 cycloalkenyl, C6-20 aryl groups, C7-20 alkylaryl groups or C7-20 arylalkyl groups or of course mixtures of these groups such as cycloalkyl substituted by alkyl.

Unless otherwise stated, preferred C1-20 hydrocarbyl groups are C1-20 alkyl, C4-20 cycloalkyl, C5-20 cycloalkyl-alkyl groups, C7-20 alkylaryl groups, C7-20 arylalkyl groups or C6-20 aryl groups, especially C1-10 alkyl groups, C6-10 aryl groups, or C7-12 arylalkyl groups, e.g. C1-8 alkyl groups. Most especially preferred hydrocarbyl groups are methyl, ethyl, propyl, isopropyl, tertbutyl, isobutyl, C5-6-cycloalkyl, cyclohexylmethyl, phenyl or benzyl.

The term halo includes fluoro, chloro, bromo and iodo groups, especially chloro groups, when relating to the complex definition.

The oxidation state of the metal ion is governed primarily by the nature of the metal ion in question and the stability of the individual oxidation states of each metal ion.

It will be appreciated that in the complexes of the invention, the metal ion M is coordinated by ligands X so as to satisfy the valency of the metal ion and to fill its available coordination sites.

The nature of these σ-ligands can vary greatly.

Such catalysts are described in WO2013/007650, which is incorporated herein by reference.

Thus, preferred complexes of use in the invention are of formula (IVa) or (IVb)

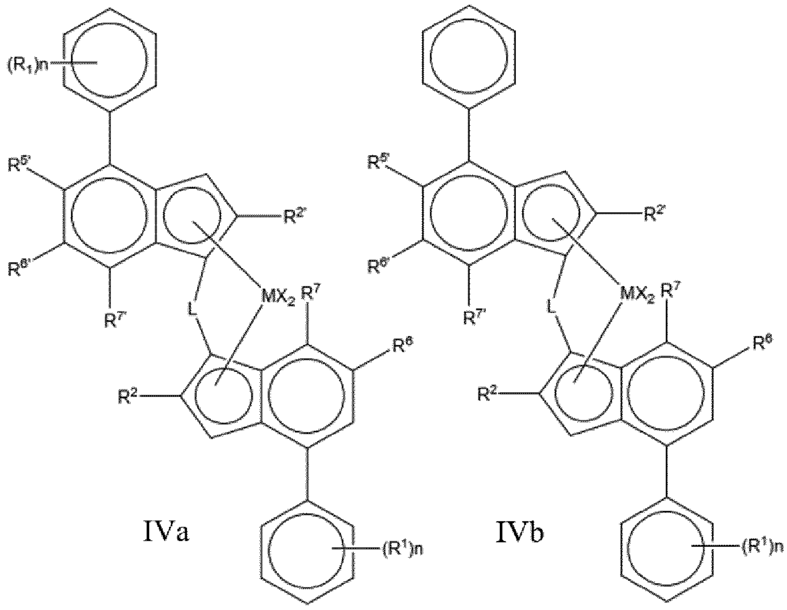

IVa IVb

wherein

M is zirconium or hafnium;
each X is a sigma ligand, preferably each X is independently a hydrogen atom, a halogen atom, C1-6 alkoxy group, C1-6 alkyl, phenyl or benzyl group;
L is a divalent bridge selected from -R'2C-, -R'2C-CR'2-, -R'2Si-, -R'2Si-SiR'2-, -R'2Ge-, wherein each R' is independently a hydrogen atom, C1-20 alkyl, C3-10 cycloalkyl, tri(C1-20- alkyl)silyl, C6-20-aryl, C7-20 arylalkyl or C7-20 alkylaryl;
each R2 or R2' is a C1-10 alkyl group;
R5' is a C1-10 alkyl group or Z'R3' group;
R6 is hydrogen or a C1-10 alkyl group;
R6' is a C1-10 alkyl group or C6-10 aryl group; preferably a tertiary alkyl group;
R7 is hydrogen, a C1-6 alkyl group or ZR3 group;
R7' is hydrogen;
Z and Z' are independently O or S;
R3' is a C1-10 alkyl group, or a C6-10 aryl group optionally substituted by one or more halo groups;
R3 is a C1-10-alkyl group;
each n is independently 0 to 4, e.g. 0, 1 or 2;
and each R1 is independently a C1-20 hydrocarbyl group, e.g. C1-10 alkyl group.

Further preferred complexes of use in the invention are of formula (Va) or (Vb):

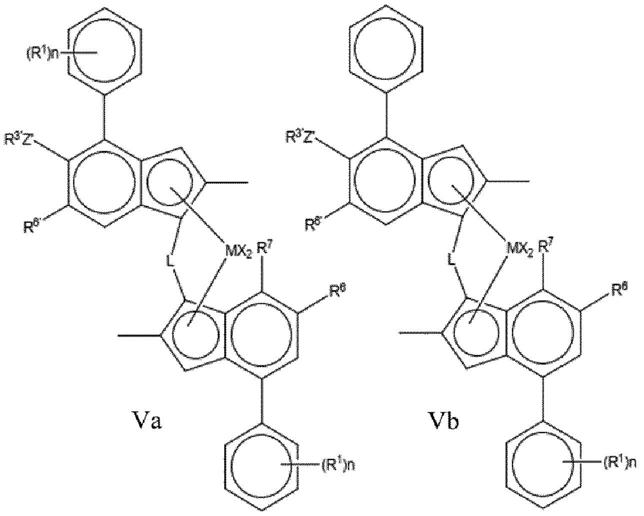

Va Vb

M is zirconium or hafnium;

each X is a sigma ligand, preferably each X is independently a hydrogen atom, a halogen atom, C1-6 alkoxy group, C1-6 alkyl, phenyl or benzyl group;

L is a divalent bridge selected from -R'2C- or -R'2Si- wherein each R' is independently a hydrogen atom, C1-20 alkyl or C3-10 cycloalkyl;

R6 is hydrogen or a C1-10 alkyl group;

R6' is a C1-10 alkyl group or C6-10 aryl group, preferably a tertiary alkyl group;

R7 is hydrogen, C1-6 alkyl or OC1-6 alkyl;

Z' is O or S;

R3' is a C1-10 alkyl group, or C6-10 aryl group optionally substituted by one or more halo groups; n is independently 0 to 4, e.g. 0, 1 or 2; and each R1 is independently a C1-10 alkyl group.

Further preferred complexes of use in the invention are of formula (VIa) or (VIb):

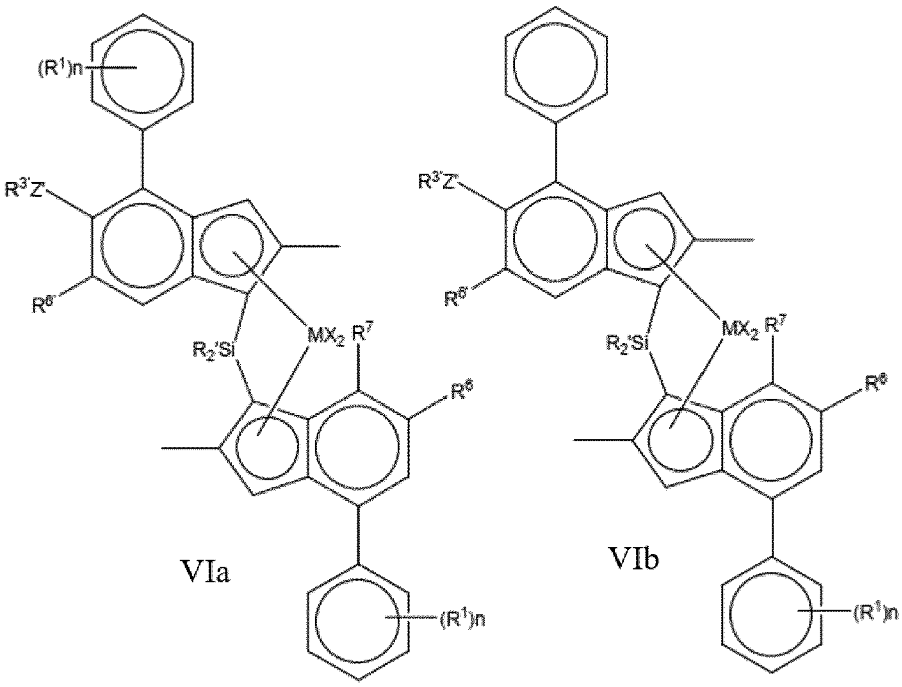

VIa VIb

M is zirconium or hafnium;

each X is a sigma ligand, preferably each X is independently a hydrogen atom, a halogen atom, C1-6-alkoxy group, C1-6-alkyl, phenyl or benzyl group;

each R' is independently a hydrogen atom, C1-20 alkyl or C3-7 cycloalkyl;
R6 is hydrogen or a C1-10 alkyl group;
R6' is a C1-10 alkyl group or C6-10 aryl group, preferably a tertiary alkyl group;
R7 is hydrogen, C1-6 alkyl or OC1-6 alkyl;
Z' is O or S;
R3' is a C1-10 alkyl group, or C6-10 aryl group optionally substituted by one or more halo groups;
n is independently 0, 1 to 2; and
each R1 is independently a C3-8 alkyl group.

Most especially, the complex of use in the invention is of formula (VIIa) or (VIIb):

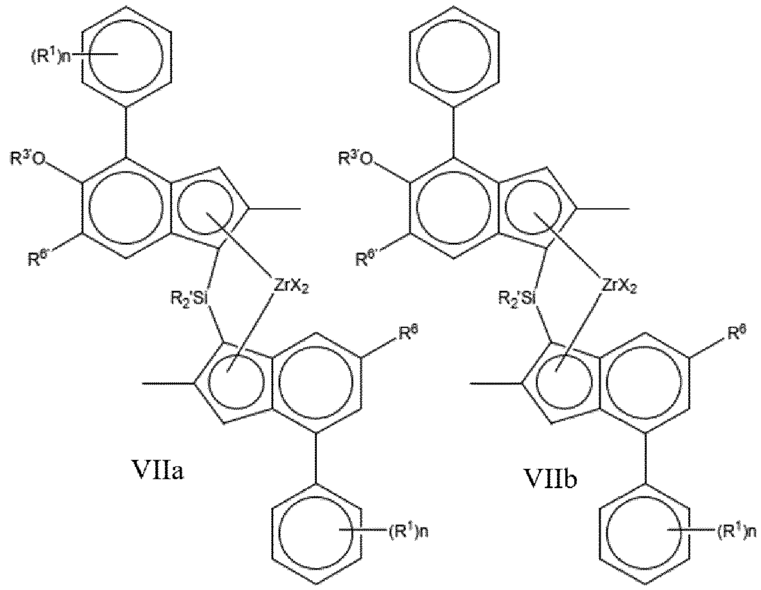

VIIa VIIb

wherein each X is a sigma ligand, preferably each X is independently a hydrogen atom, a halogen atom, C1-6-alkoxy group, C1-6-alkyl, phenyl or benzyl group;
R' is independently a C1-6 alkyl or C3-10 cycloalkyl;
R1 is independently C3-8 alkyl;
R6 is hydrogen or a C3-8 alkyl group;
R6' is a C3-8 alkyl group or C6-10 aryl group, preferably a tertiary C4-8 alkyl group;
R3' is a C1-6 alkyl group, or C6-10 aryl group optionally substituted by one or more halo groups; and
n is independently 0, 1 or 2.

Particular compounds according to the second embodiment include

| | | | |
|---|---|---|---|
| 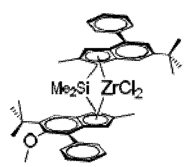 | 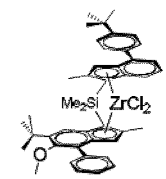 | 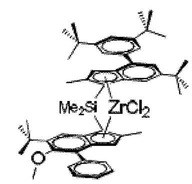 | 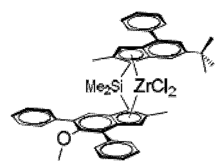 |
| rac-anti-$Me_2$Si(2-Me-4-Ph-6-*t*Bu-Ind)(2-Me-4-Ph-5-OMe-6-*t*Bu-Ind)$ZrCl_2$ | rac-anti-$Me_2$Si(2-Me-4-(p-*t*BuPh)-Ind)(2-Me-4-Ph-5-OMe-6-*t*Bu-Ind)$ZrCl_2$ | rac-anti-$Me_2$Si(2-Me-4-(3.5-di-*t*BuPh)-6-*t*Bu-Ind)(2-Me-4-Ph-5-OMe-6-*t*Bu-Ind)$ZrCl_2$ | rac-anti-$Me_2$Si(2-Me-4-Ph-6-*t*Bu-Ind)(2-Me-4,6-di-Ph-5-OMe-Ind)$ZrCl_2$ |

| | | | |
|---|---|---|---|
| 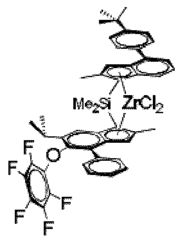 | 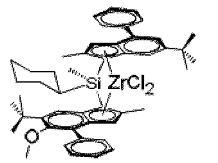 | 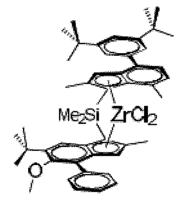 | 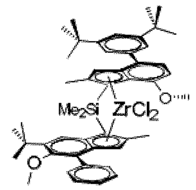 |
| rac-anti-$Me_2Si$(2-Me-4-(p-*t*BuPh)-Ind)(2-Me-4-Ph-5-$OC_6F_5$)-6-*i*Pr-Ind)$ZrCl_2$ | rac-anti-Me(CyHex)Si(2-Me-4-Ph-6-*t*Bu-Ind)(2-Me-4-Ph-5-OMe-6-*t*Bu-Ind)$ZrCl_2$ | rac-anti-$Me_2Si$(2-Me-4-(3,5-di-*t*BuPh)-7-Me-Ind)(2-Me-4-Ph-5-OMe-6-*t*Bu-Ind)$ZrCl_2$ | rac-anti-$Me_2Si$(2-Me-4-(3,5-di-*t*BuPh)-7-OMe-Ind)(2-Me-4-Ph-5-OMe-6-*t*Bu-Ind)$ZrCl_2$ |
| 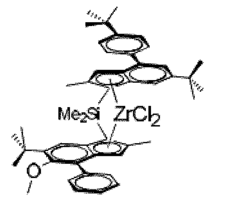 | 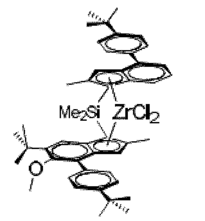 | 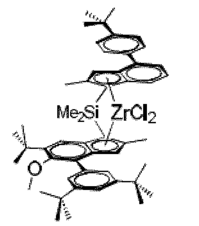 | 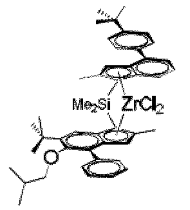 |
| rac-anti-$Me_2Si$(2-Me-4-(p-tBuPh)-6-*t*Bu-Ind)(2-Me-4-Ph-5-OMe-6-*t*Bu-Ind)$ZrCl_2$ | rac-anti-$Me_2Si$(2-Me-4-(p-tBuPh)-Ind](2-Me-4-(4-tBuPh)-5-OMe-6-*t*Bu-Ind) $ZrCl_2$ | rac-anti-$Me_2Si$(2-Me-4-(p-tBuPh)-Ind)(2-Me-4-(3,5-tBu2Ph)-5-OMe-6-*t*Bu-Ind)$ZrCl_2$ | rac-anti-$Me_2Si$(2-Me-4-(p-tBuPh)-Ind)(2-Me-4-Ph-5-OiBu-6-*t*Bu-Ind)$ZrCl_2$ |

Most preferably rac-anti-$Me_2Si$(2-Me-4-(p-*t*BuPh)-Ind)(2-Me-4-Ph-5-OMe-6-*t*Bu-Ind)$ZrCl_2$ is used

The synthesis of these materials is described in WO2013/007650.

According to the present invention a co-catalyst system comprising a boron containing co-catalyst and/or an aluminoxane co-catalyst is used in combination with the above defined metallocene catalyst complex.

The aluminoxane co-catalyst can be one of formula (VIII):

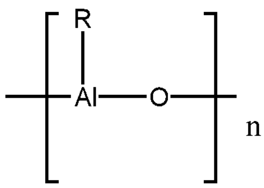

(VIII)

where n is usually from 6 to 20 and R has the meaning below.

Aluminoxanes are formed on partial hydrolysis of organoaluminum compounds, for example those of the formula $AlR_3$, $AlR_2Y$ and $Al_2R_3Y_3$ where R can be, for example, $C_1$-$C_{10}$ alkyl, preferably $C_1$-$C_5$ alkyl, or $C_3$-$C_{10}$ cycloalkyl, $C_7$-$C_{12}$ arylalkyl or alkylaryl and/or phenyl or naphthyl, and where Y can be hydrogen, halogen, preferably chlorine or bromine, or $C_1$-$C_{10}$ alkoxy, preferably methoxy or ethoxy. The resulting oxygen-containing aluminoxanes are not in general pure compounds but mixtures of oligomers of the formula (VI).

The preferred aluminoxane is methylaluminoxane (MAO). Since the aluminoxanes used as co-catalysts according to the invention are not, owing to their mode of preparation, pure compounds, the molarity of aluminoxane solutions hereinafter is based on their aluminium content.

According to the present invention, also a boron containing co-catalyst can be used instead of the aluminoxane co-catalyst or the aluminoxane co-catalyst can be used in combination with a boron containing co-catalyst.

It will be appreciated by the person skilled in the art that where boron based co-catalysts are employed, it is normal to pre-alkylate the complex by reaction thereof with an aluminium alkyl compound, such as TIBA. This procedure is well known and any suitable aluminium alkyl, e.g. Al($C_1$-$C_6$ alkyl)$_3$ can be used. Preferred aluminium alkyl compounds are triethylaluminium, triisobutylaluminium, tri-isohexylaluminium, tri-n-octylaluminium and tri-isooctylaluminium.

Alternatively, when a borate co-catalyst is used, the metallocene catalyst complex is in its alkylated version, that is for example a dimethyl or dibenzyl metallocene catalyst complex can be used.

Boron based co-catalysts of interest include those of formula (IX)

$BY_3$ (IX)

wherein Y is the same or different and is a hydrogen atom, an alkyl group of from 1 to about 20 carbon atoms, an aryl group of from 6 to about 15 carbon atoms, alkylaryl, arylalkyl, haloalkyl or haloaryl each having from 1 to 10 carbon atoms in the alkyl radical and from 6-20 carbon atoms in the aryl radical or fluorine, chlorine, bromine or iodine. Preferred examples for Y are methyl, propyl, isopropyl, isobutyl or trifluoromethyl, unsaturated groups such as aryl or haloaryl like phenyl, tolyl, benzyl groups, p-fluorophenyl, 3,5- difluorophenyl, pentachlorophenyl, pentafluorophenyl, 3,4,5-trifluorophenyl and 3,5- di(trifluoromethyl)phenyl. Preferred options are trifluoroborane, triphenylborane, tris(4-fluorophenyl)borane, tris(3,5-difluorophenyl)borane, tris(4-fluoromethylphenyl)borane, tris(2,4,6-trifluorophenyl)borane, tris(penta-fluorophenyl)borane, tris(tolyl)borane, tris(3,5-dimethyl-phenyl)borane, tris(3,5-difluorophenyl)borane and/or tris (3,4,5-trifluorophenyl)borane.

Particular preference is given to tris(pentafluorophenyl)borane.

However it is preferred that borates are used, i.e. compounds containing a borate 3+ ion. Such ionic co-catalysts preferably contain a non-coordinating anion such as tetrakis(pentafluorophenyl)borate and tetraphenylborate. Suitable counterions are protonated amine or aniline derivatives such as methylammonium, anilinium, dimethylammonium, diethylammonium, N- methylanilinium, diphenylammonium, N,N-dimethylanilinium, trimethylammonium, triethylammonium, tri-n-butylammonium, methyldiphenylammonium, pyridinium, p-bromo-N,N- dimethylanilinium or p-nitro-N,N-dimethylanilinium.

Preferred ionic compounds which can be used according to the present invention include:

triethylammoniumtetra(phenyl)borate,
tributylammoniumtetra(phenyl)borate,
trimethylammoniumtetra(tolyl)borate,
tributylammoniumtetra(tolyl)borate,
tributylammoniumtetra(pentafluorophenyl)borate, tripropylammoniumtetra(dimethylphenyl)borate, tributylammoniumtetra(trifluoromethylphenyl)borate,
tributylammoniumtetra(4 -fluorophenyl)borate,
N,N-dimethylcyclohexylammoniumtetrakis(pentafluorophenyl)borate,
N,N-dimethylbenzylammoniumtetrakis(pentafluorophenyl)borate,
N,N-dimethylaniliniumtetra(phenyl)borate,
N,N-diethylaniliniumtetra(phenyl)borate,
N,N-dimethylaniliniumtetrakis(pentafluorophenyl)borate,
N,N-di(propyl)ammoniumtetrakis(pentafluorophenyl)borate,
di(cyclohexyl)ammoniumtetrakist(pentafluorophenyl)borate,
triphenylphosphoniumtetrakis(phenyl)borate,
triethylphosphoniumtetrakis(phenyl)borate,
diphenylphosphoniumtetrakis(phenyl)borate, tri(methylphenyl)phosphoniumtetrakis(phenyl)borate, tri(dimethylphenyl)phosphoniumtetrakis(phenyl)borate,
triphenylcarbeniumtetrakis(pentafluorophenyl)borate,
or ferroceniumtetrakis(pentafluorophenyl)borate.

Preference is given to triphenylcarbeniumtetrakis(pentafluorophenyl) borate,

N,N- dimethylcyclohexylammoniumtetrakis(pentafluorophenyl)borate or
N,N- dimethylbenzylammoniumtetrakis(pentafluorophenyl)borate.

It has been surprisingly found that certain boron co-catalysts are especially preferred. Preferred borates of use in the invention therefore comprise the trityl ion. Thus the use of N,N-dimethylammonium-tetrakispentafluorophenylborate and $Ph_3CB(PhF_5)_4$ and analogues therefore are especially favoured.

According to the present invention, the preferred co-catalysts are aluminoxanes, more preferably methylaluminoxanes, combinations of aluminoxanes with Al-alkyls, boron or borate co-catalysts, and combination of aluminoxanes with boron-based co-catalysts.

Suitable amounts of co-catalyst will be well known to the person skilled in the art.

The molar ratio of boron to the metal ion of the metallocene may be in the range 0.5:1 to 10: 1 mol/mol, preferably

1:1 to 10: 1, especially 1: 1 to 5:1 mol/mol.

The molar ratio of Al in the aluminoxane to the metal ion of the metallocene may be in the range 1: 1 to 2000: 1 mol/mol, preferably 10:1 to 1000: 1, and more preferably 50:1 to 500:1 mol/mol.

**Propylene homopolymer composition (H-PP)**

The minor component present in the monophasic polypropylene composition (PC) of the invention is a propylene homopolymer composition (H-PP).

The propylene homopolymer composition (H-PP) comprises a reactor blend of a propylene homopolymer and a polymeric nucleating agent.

The polymeric nucleating agent is present in an amount in the range from 20 to 300 wt-ppm, more preferably 20 to 200 wt-ppm, most preferably 20 to 100 wt-ppm, relative to the total weight of the propylene homopolymer composition (H-PP).

The polymeric nucleating agent comprises a monomer (I) of the general formula

$$H_2C=CH-CHR^1R^2 \qquad (I)$$

wherein $R^1$ and $R^2$ are either individual alkyl groups with one or more carbon atoms or form an optionally substituted saturated, unsaturated or aromatic ring or a fused ring system containing 4 to 20 carbon atoms, whereby in case $R^1$ and $R^2$ form an aromatic ring, the hydrogen atom of the $-CHR^1R^2$ moiety is not present.

Preferably, the monomer (I) of the polymeric nucleating agent is selected from the group consisting of vinyl cyclohexane, vinyl cyclopentane and 4-methylpent-1-ene, most preferably the monomer is vinylcyclohexane.

Whilst other monomers may be present in the polymeric nucleating agent, most commonly propylene monomers, it is preferred that the polymeric nucleating agent consists of monomers of the general formula (I).

In one particularly preferred embodiment, the polymeric nucleating agent is a homopolymer of vinyl cyclohexane (pVCH).

Since the propylene homopolymer composition (H-PP) is present as a reactor blend of a propylene homopolymer and the polymeric nucleating agent, all polymer properties that relate to the propylene homopolymer have been measured for the propylene homopolymer composition (H-PP).

The propylene homopolymer composition (H-PP) has a melt flow rate ($MFR_2$), measured according to ISO 1133 at 230 °C and 2.16 kg, in the range from 10 to 100 g/10 min, more preferably in the range from 30 to 90 g/10 min, most preferably in the range from 50 to 80 g/10 min.

Preferably the propylene homopolymer composition (H-PP) has a xylene cold soluble content (XCS), as determined at 25 °C according to ISO 16152, in the range of 0.5 to 4.0 wt.-%, more preferably in the range from 1.0 to 3.0 wt.-%, most preferably in the range from 1.5 to 2.0 wt.-%.

The propylene homopolymer composition (H-PP) is preferably polymerized in the presence of a Ziegler-Natta catalyst (ZNC).

The absence of 2,1-regiodefects is a key indicator that a propylene polymer has been polymerized in the presence of a Ziegler-Natta catalyst. Consequently, it is required that the propylene homopolymer composition (H-PP) is free from 2,1-regiodefects as determined by $^{13}$C-NMR spectroscopy.

It is furthermore preferred that the propylene homopolymer composition (H-PP) has an isotactic pentad concentration [mmmm] as determined by $^{13}$C-NMR spectroscopy in the range from 90.0 to 99.9%, more preferably in the range from 94.0 to 99.0%, most preferably in the range from 95.5 to 98.5%.

It is particularly preferred that the propylene homopolymer composition (H-PP) is preferably polymerized in the presence of a Ziegler-Natta catalyst that does not comprise phthalate-based electron donors.

Thus, it is preferred that the propylene homopolymer composition (H-PP) is free of phthalic esters and their decomposition products.

The propylene homopolymer composition (H-PP) preferably has a melting temperature $T_m$ in the range from 160 to 175 °C, more preferably in the range from 162 to 172 °C, most preferably in the range from 164 to 169 °C.

The propylene homopolymer composition (H-PP) preferably has a crystallisation temperature $T_c$ in the range from 125 to 135 °C, more preferably in the range from 127 to 133 °C, most preferably in the range from 128 to 132 °C.

Both $T_m$ and $T_c$ are determined by differential scanning calorimetry (DSC) according to ISO 11357 / part 3 / method C2 in a heat / cool / heat cycle with a scan rate of 10 °C/min in the temperature range of -30 to +225 °C.

The propylene homopolymer composition (H-PP) preferably has a glass transition temperature $T_g$, determined by dynamic mechanical analysis according to ISO 6721-7, in the range from -10 to 10 °C, more preferably in the range from -5 to 5 °C, most preferably in the range from -2 to 2 °C

The propylene homopolymer composition (H-PP) preferably has a number average molecular weight (Mn), determined by Gel Permeation Chromatography (GPC), in the range from 15,000 to 35,000 g/mol, more preferably in

the range from 17,000 to 30,000 g/mol, most preferably in the range from 19,000 to 25,000 g/mol.

The propylene homopolymer composition (H-PP) preferably has a weight average molecular weight (Mw), determined by Gel Permeation Chromatography (GPC), in the range from 134,000 to 148,000 g/mol, more preferably in the range from 136,000 to 146,000 g/mol, most preferably in the range from 138,000 to 144,000 g/mol.

The propylene homopolymer composition (H-PP) preferably has a molecular weight distribution (Mw/Mn), determined by Gel Permeation Chromatography (GPC), in the range from 4.0 to 20.0, more preferably in the range from 5.0 to 15.0, most preferably in the range from 5.5 to 10.0.

The propylene homopolymer composition (H-PP) according to this invention is preferably produced in the presence of

(a) a Ziegler-Natta catalyst (ZN-C) comprising compounds (TC) of a transition metal of Group 4 to 6 of IUPAC, a Group 2 metal compound (MC) and an internal donor (ID);
(b) optionally a co-catalyst (Co), and
(c) optionally an external donor (ED).

Preferably, the propylene homopolymer composition (H-PP) is produced in a two reactors, i.e. is bimodal.

**Process for producing the propylene homopolymer composition (H-PP)**

The process for the preparation of the propylene homopolymer composition (H-PP) as well as the Ziegler-Natta catalyst (ZN-C) are further described in detail below.

As already indicated above, the propylene homopolymer composition (H-PP) is preferably produced in a sequential polymerization process.

In alternative embodiments, a single polymerization process may be employed.

The term "sequential polymerization system" indicates that the propylene homopolymer composition (H-PP) is produced in at least two reactors connected in series. Accordingly, such a polymerization system comprises at least a first polymerization reactor (R1) and a second polymerization reactor (R2), and optionally a third polymerization reactor (R3). The term "polymerization reactor" shall indicate that the main polymerization takes place. Thus, in case the process consists of two polymerization reactors, this definition does not exclude the option that the overall system comprises for instance a pre-polymerization step in a pre-polymerization reactor. The term "consist of" is only a closing formulation in view of the main polymerization reactors.

The first polymerization reactor (R1) is preferably a slurry reactor (SR) and can be any continuous or simple stirred batch tank reactor or loop reactor operating in bulk or slurry. Bulk means a polymerization in a reaction medium that comprises of at least 60 % (w/w) monomer. According to the present invention, the slurry reactor (SR) is preferably a (bulk) loop reactor (LR). Accordingly, the average concentration of the propylene homopolymer composition (H-PP), or the first fraction of the propylene homopolymer composition (H-PP1) if a sequential process is being used, in the polymer slurry within the loop reactor (LR) is typically from 15 wt.-% to 55 wt.-%, based on the total weight of the polymer slurry within the loop reactor (LR). In one preferred embodiment of the present invention, the average concentration of the propylene homopolymer composition (H-PP), or the first fraction of the propylene homopolymer composition (H-PP1) if a sequential process is being used, in the polymer slurry within the loop reactor (LR) is from 20 wt.-% to 55 wt.-% and more preferably from 25 wt.-% to 52 wt.-%, based on the total weight of the polymer slurry within the loop reactor (LR).

If other reactors are present, then these reactors, e.g. the optional second polymerization reactor (R2) and the optional third polymerization reactor (R3) are gas phase reactors (GPRs), i.e. a first gas phase reactor (GPR1) and a second gas phase reactor (GPR2). A gas phase reactor (GPR) according to this invention is preferably a fluidized bed reactor, a fast fluidized bed reactor or a settled bed reactor or any combination thereof.

If a sequential process is used, the propylene homopolymer of the first polymerization reactor (R1), i.e. the first fraction of the propylene homopolymer composition (H-PP1), more preferably the polymer slurry of the loop reactor (LR) containing the first fraction of the propylene homopolymer composition (H-PP1), is directly fed into the second polymerization reactor (R2), i.e. into the (first) gas phase reactor (GPR1), without a flash step between the stages. This kind of direct feed is described in EP 887379 A, EP 887380 A, EP 887381 A and EP 991684 A. By "direct feed" is meant a process wherein the content of the first polymerization reactor (R1), i.e. of the loop reactor (LR), the polymer slurry comprising the the first fraction of the propylene homopolymer composition (H-PP1) is led directly to the next stage gas phase reactor.

Alternatively, the propylene homopolymer of the first polymerization reactor (R1), i.e. the first fraction of the propylene homopolymer composition (H-PP1), more preferably polymer slurry of the loop reactor (LR) containing the first fraction of the propylene homopolymer composition (H-PP1), may be also directed into a flash step or through a further concentration step before fed into the second polymerization reactor (R2), i.e. into the gas phase reactor (GPR).

Accordingly, this "indirect feed" refers to a process wherein the content of the first polymerization reactor (R1), of the loop reactor (LR), i.e. the polymer slurry, is fed into the second polymerization reactor (R2), into the (first) gas phase reactor (GPR1), via a reaction medium separation unit and the reaction medium as a gas from the separation unit.

More specifically, the optional second polymerization reactor (R2), and any subsequent reactor, for instance the third polymerization reactor (R3), are preferably gas phase reactors (GPRs). Such gas phase reactors (GPR) can be any mechanically mixed or fluid bed reactors. Preferably the gas phase reactors (GPRs) comprise a mechanically agitated fluid bed reactor with gas velocities of at least 0.2 m/sec. It is thus appreciated that the gas phase reactor is a fluidized bed type reactor optionally with a mechanical stirrer.

Thus, when a sequential polymerization process is used, it is preferred that the first polymerization reactor (R1) is a slurry reactor (SR), like loop reactor (LR), whereas the second polymerization reactor (R2) and any optional subsequent reactor, like the third polymerization reactor (R3), are gas phase reactors (GPRs). Accordingly in such a process at least two, preferably two polymerization reactors (R1) and (R2) or three polymerization reactors (R1), (R2) and (R3), namely a slurry reactor (SR), like loop reactor (LR) and a (first) gas phase reactor (GPR1) and optionally a second gas phase reactor (GPR2), connected in series are used. If needed prior to the slurry reactor (SR) a pre-polymerization reactor may be placed.

The Ziegler-Natta catalyst (ZN-C) is fed into the first polymerization reactor (R1) and is transferred with the polymer (slurry) obtained in the first polymerization reactor (R1) into the subsequent reactors, should any subsequent reactors be used. If the process covers also a pre-polymerization step, it is preferred that all of the Ziegler-Natta catalyst (ZN-C) is fed in the pre-polymerization reactor. Subsequently the pre-polymerization product containing the Ziegler-Natta catalyst (ZN-C) is transferred into the first polymerization reactor (R1).

A preferred multistage process is a "loop-gas phase"-process, such as developed by Borealis A/S, Denmark (known as BORSTAR® technology) described e.g. in patent literature, such as in EP 0 887 379, WO 92/12182 WO 2004/000899, WO 2004/111095, WO 99/24478, WO 99/24479 or in WO 00/68315.

A further suitable slurry-gas phase process is the Spheripol® process of Basell.

Especially good results are achieved in case the temperature in the reactors is carefully chosen.

Accordingly it is preferred that the operating temperature in the first polymerization reactor (R1) is in the range from 62 to 85 °C, more preferably in the range from 65 to 82 °C, still more preferably in the range from 67 to 80 °C.

Alternatively or additionally to the previous paragraph it is preferred that the operating temperature in the optional second polymerization reactor (R2) and in the optional third reactor (R3) is in the range from 62 to 95 °C, more preferably in the range from 67 to 92 °C.

Preferably, the operating temperature in the optional second polymerization reactor (R2) is equal to or higher than the operating temperature in the first polymerization reactor (R1). Accordingly it is preferred that the operating temperature

(a) in the first polymerization reactor (R1) is in the range from 62 to 85 °C, more preferably in the range from 65 to 82 °C, still more preferably in the range from 67 to 80 °C, like 69 to 80 °C;
and
(b) in the optional second polymerization reactor (R2) is in the range from 75 to 95 °C, more preferably in the range from 78 to 92 °C, still more preferably in the range from 78 to 88 °C,

with the proviso that the operating temperature in the in the optional second polymerization reactor (R2) is equal or higher to the operating temperature in the first polymerization reactor (R1).

Typically the pressure in the first polymerization reactor (R1), preferably in the loop reactor (LR), is in the range from 20 to 80 bar, preferably 30 to 70 bar, like 35 to 65 bar, whereas the pressure in the optional second polymerization reactor (R2), i.e. in the (first) gas phase reactor (GPR1), and optionally in any subsequent reactor, like in the third polymerization reactor (R3), e.g. in the second gas phase reactor (GPR2), is in the range from 5 to 50 bar, preferably 15 to 40 bar.

Preferably hydrogen is added in each polymerization reactor in order to control the molecular weight, i.e. the melt flow rate $MFR_2$.

Preferably, the average residence time in the polymerization reactors (R1) and (R2) is rather long. In general, the average residence time ($\tau$) is defined as the ratio of the reaction volume ($V_R$) to the volumetric outflow rate from the reactor ($Q_o$) (i.e. $V_R/Q_o$), i.e $\tau = V_R/Q_o$ [tau = $V_R/Q_o$]. In case of a loop reactor the reaction volume ($V_R$) equals to the reactor volume.

Accordingly, the average residence time ($\tau$) in the first polymerization reactor (R1) is preferably at least 15 min, more preferably in the range from 15 to 80 min, still more preferably in the range from 20 to 60 min, like in the range from 24 to 50 min, and/or the average residence time ($\tau$) in the second polymerization reactor (R2) - if present - is preferably at least 70 min, more preferably in the range from 70 to 220 min, still more preferably in the range from 80 to 210 min, yet more preferably in the range from 90 to 200 min, like in the range from 90 to 190 min. Preferably the average

residence time (τ) in the third polymerization reactor (R3) - if present - is preferably at least 30 min, more preferably in the range from 30 to 120 min, still more preferably in the range from 40 to 100 min, like in the range from 50 to 90 min.

As mentioned above, the preparation of the propylene homopolymer can comprise in addition to the (main) polymerization of the propylene homopolymer in the at least one polymerization reactor (R1 and optional R2 and R3) prior thereto a pre-polymerization in a pre-polymerization reactor (PR) upstream to the first polymerization reactor (R1).

In the pre-polymerization reactor (PR) a polypropylene (Pre-PP) is produced. The pre-polymerization is conducted in the presence of the Ziegler-Natta catalyst (ZN-C). According to this embodiment the Ziegler-Natta catalyst (ZN-C), the co-catalyst (Co), and the external donor (ED) are all introduced to the pre-polymerization step. However, this shall not exclude the option that at a later stage for instance further co-catalyst (Co) and/or external donor (ED) is added in the polymerization process, for instance in the first reactor (R1). In one embodiment the Ziegler-Natta catalyst (ZN-C), the co-catalyst (Co), and the external donor (ED) are only added in the pre-polymerization reactor (PR), if a pre-polymerization is applied.

The pre-polymerization reaction is typically conducted at a temperature of 0 to 60 °C, preferably from 15 to 50 °C, and more preferably from 20 to 45 °C.

The pressure in the pre-polymerization reactor is not critical but must be sufficiently high to maintain the reaction mixture in liquid phase. Thus, the pressure may be from 20 to 100 bar, for example 30 to 70 bar.

In a preferred embodiment, the pre-polymerization is conducted as bulk slurry polymerization in liquid propylene, i.e. the liquid phase mainly comprises propylene, with optionally inert components dissolved therein. Furthermore, according to the present invention, an ethylene feed is employed during pre-polymerization as mentioned above.

It is possible to add other components also to the pre-polymerization stage. Thus, hydrogen may be added into the pre-polymerization stage to control the molecular weight of the polypropylene (Pre-PP) as is known in the art. Further, antistatic additive may be used to prevent the particles from adhering to each other or to the walls of the reactor.

The precise control of the pre-polymerization conditions and reaction parameters is within the skill of the person skilled in the art.

Due to the above defined process conditions in the pre-polymerization, preferably a mixture (MI) of the Ziegler-Natta catalyst (ZN-C) and the polypropylene (Pre-PP) produced in the pre-polymerization reactor (PR) is obtained. Preferably, the Ziegler-Natta catalyst (ZN-C) is (finely) dispersed in the polypropylene (Pre-PP). In other words, the Ziegler-Natta catalyst (ZN-C) particles introduced in the pre-polymerization reactor (PR) split into smaller fragments which are evenly distributed within the growing polypropylene (Pre-PP). The sizes of the introduced Ziegler-Natta catalyst (ZN-C) particles as well as of the obtained fragments are not of essential relevance for the instant invention and within the skilled knowledge.

As mentioned above, if a pre-polymerization is used, subsequent to said pre-polymerization, the mixture (MI) of the Ziegler-Natta catalyst (ZN-C) and the polypropylene (Pre-PP) produced in the pre-polymerization reactor (PR) is transferred to the first reactor (R1). Typically the total amount of the polypropylene (Pre-PP) in the final propylene copolymer (R-PP) is rather low and typically not more than 5.0 wt.-%, more preferably not more than 4.0 wt.-%, still more preferably in the range from 0.5 to 4.0 wt.-%, like in the range 1.0 of to 3.0 wt.-%.

In case that pre-polymerization is not used, propylene and the other ingredients such as the Ziegler-Natta catalyst (ZN-C) are directly introduced into the first polymerization reactor (R1).

Accordingly, the propylene homopolymer may be produced in a process comprising the following steps under the conditions set out above

(a) in the first polymerization reactor (R1), i.e. in a loop reactor (LR), propylene is polymerized obtaining a first fraction of the propylene homopolymer composition (H-PP1),

(b) transferring said first fraction of the propylene homopolymer composition (H-PP1) to a second polymerization reactor (R2),

(c) in the second polymerization reactor (R2) propylene is polymerized in the presence of the first fraction of the propylene homopolymer composition (H-PP1), obtaining a second fraction of the propylene homopolymer composition (H-PP2) of the propylene homopolymer, said first fraction of the propylene homopolymer composition (H-PP 1) and said second fraction of the propylene homopolymer composition (H-PP2), form the propylene homopolymer composition (H-PP).

In one embodiment, when a unimodal propylene homopolymer is desired, the propylene homopolymer is produced in a process comprising the following steps under the conditions set out above:

(a) in the first polymerization reactor (R1), i.e. in a loop reactor (LR), propylene is polymerized obtaining a propylene homopolymer (H-PP),

(b) removal of the propylene homopolymer (H-PP) from the first polymerization reactor.

A pre-polymerization as described above can be accomplished prior to step (a).

The catalyst used in the present invention is a solid Ziegler-Natta catalyst (ZN-C), which comprises compounds (TC) of a transition metal of Group 4 to 6 of IUPAC, like titanium, a Group 2 metal compound (MC), like a magnesium, and an internal donor (ID) being a non-phthalic compound, preferably a non-phthalic acid ester, still more preferably being a diester of non-phthalic dicarboxylic acids as described in more detail below. Thus, the catalyst is fully free of undesired phthalic compounds. Further, the solid catalyst is preferably free of any external support material, like silica or $MgCl_2$, but the catalyst is self-supported. A self-supported catalyst is not free of magnesium halides, since these are formed during the reaction between the magnesium compound and $TiCl_4$; however, the presence of magnesium halides as external support media is preferably excluded.

The Ziegler-Natta catalyst (ZN-C) can be further defined by the way as obtained. Accordingly, the Ziegler-Natta catalyst (ZN-C) is preferably obtained by a process comprising the steps of

a)

$a_1$) providing a solution of at least a Group 2 metal alkoxy compound (Ax) being the reaction product of a Group 2 metal compound (MC) and an alcohol (A) comprising in addition to the hydroxyl moiety at least one ether moiety optionally in an organic liquid reaction medium;
or
$a_2$) a solution of at least a Group 2 metal alkoxy compound (Ax') being the reaction product of a Group 2 metal compound (MC) and an alcohol mixture of the alcohol (A) and a monohydric alcohol (B) of formula ROH, optionally in an organic liquid reaction medium;
or
$a_3$) providing a solution of a mixture of the Group 2 alkoxy compound (Ax) and a Group 2 metal alkoxy compound (Bx) being the reaction product of a Group 2 metal compound (MC) and the monohydric alcohol (B), optionally in an organic liquid reaction medium; and

b) adding said solution from step a) to at least one compound (TC) of a transition metal of Group 4 to 6 and
c) obtaining the solid catalyst component particles,

and adding a non-phthalic internal electron donor (ID) at any step prior to step c).

The internal donor (ID) or precursor thereof is added preferably to the solution of step a).

According to the procedure above the Ziegler-Natta catalyst (ZN-C) can be obtained via precipitation method or via emulsion (liquid/liquid two-phase system) - solidification method depending on the physical conditions, especially temperature used in steps b) and c).

In both methods (precipitation or emulsion-solidification) the catalyst chemistry is the same.

In precipitation method combination of the solution of step a) with at least one transition metal compound (TC) in step b) is carried out and the whole reaction mixture is kept at least at 50 °C, more preferably in the temperature range of 55 to 110 °C, more preferably in the range from 70 to 100 °C, to secure full precipitation of the catalyst component in form of a solid particles (step c).

In emulsion - solidification method in step b) the solution of step a) is typically added to the at least one transition metal compound (TC) at a lower temperature, such as from -10 to below 50°C, preferably from -5 to 30°C. During agitation of the emulsion, the temperature is typically kept at -10 to below 40°C, preferably from -5 to 30°C. Droplets of the dispersed phase of the emulsion form the active catalyst composition. Solidification (step c) of the droplets is suitably carried out by heating the emulsion to a temperature of 70 to 150°C, preferably to 80 to 110°C.

The catalyst prepared by emulsion - solidification method is preferably used in the present invention.

In a preferred embodiment in step a) the solution of $a_2$) or $a_3$) are used, i.e. a solution of (Ax') or a solution of a mixture of (Ax) and (Bx).

Preferably the Group 2 metal (MC) is magnesium.

The magnesium alkoxy compounds (Ax), (Ax') and (Bx) can be prepared *in situ in* the first step of the catalyst preparation process, step a), by reacting the magnesium compound with the alcohol(s) as described above, or said magnesium alkoxy compounds can be separately prepared magnesium alkoxy compounds or they can be even commercially available as ready magnesium alkoxy compounds and used as such in the catalyst preparation process of the invention.

Illustrative examples of alcohols (A) are monoethers of dihydric alcohols (glycol monoethers). Preferred alcohols (A) are $C_2$ to $C_4$ glycol monoethers, wherein the ether moieties comprise from 2 to 18 carbon atoms, preferably from 4 to 12 carbon atoms. Preferred examples are 2-(2-ethylhexyloxy)ethanol, 2-butyloxy ethanol, 2-hexyloxy ethanol and 1,3-propylene-glycol-monobutyl ether, 3-butoxy-2-propanol, with 2-(2-ethylhexyloxy)ethanol and 1,3-propylene-glycol-monobutyl ether, 3-butoxy-2-propanol being particularly preferred.

Illustrative monohydric alcohols (B) are of formula ROH, with R being straight-chain or branched $C_6$-$C_{10}$ alkyl residue. The most preferred monohydric alcohol is 2-ethyl-1-hexanol or octanol.

Preferably a mixture of Mg alkoxy compounds (Ax) and (Bx) or mixture of alcohols (A) and (B), respectively, are used and employed in a mole ratio of Bx:Ax or B:A from 8:1 to 2:1, more preferably 5:1 to 3:1.

Magnesium alkoxy compound may be a reaction product of alcohol(s), as defined above, and a magnesium compound selected from dialkyl magnesiums, alkyl magnesium alkoxides, magnesium dialkoxides, alkoxy magnesium halides and alkyl magnesium halides. Alkyl groups can be a similar or different $C_1$-$C_{20}$ alkyl, preferably $C_2$-$C_{10}$ alkyl. Typical alkyl-alkoxy magnesium compounds, when used, are ethyl magnesium butoxide, butyl magnesium pentoxide, octyl magnesium butoxide and octyl magnesium octoxide. Preferably, dialkyl magnesiums are used. Most preferred dialkyl magnesiums are butyl octyl magnesium or butyl ethyl magnesium.

It is also possible that magnesium compound can react in addition to the alcohol (A) and alcohol (B) also with a polyhydric alcohol (C) of formula R" $(OH)_m$ to obtain said magnesium alkoxide compounds. Preferred polyhydric alcohols, if used, are alcohols, wherein R" is a straight-chain, cyclic or branched $C_2$ to $C_{10}$ hydrocarbon residue, and m is an integer of 2 to 6.

The magnesium alkoxy compounds of step a) are thus selected from the group consisting of magnesium dialkoxides, diaryloxy magnesiums, alkyloxy magnesium halides, aryloxy magnesium halides, alkyl magnesium alkoxides, aryl magnesium alkoxides and alkyl magnesium aryloxides. In addition a mixture of magnesium dihalide and a magnesium dialkoxide can be used.

The solvents to be employed for the preparation of the present catalyst may be selected among aromatic and aliphatic straight chain, branched and cyclic hydrocarbons with 5 to 20 carbon atoms, more preferably 5 to 12 carbon atoms, or mixtures thereof. Suitable solvents include benzene, toluene, cumene, xylol, pentane, hexane, heptane, octane and nonane. Hexanes and pentanes are particular preferred.

Mg compound is typically provided as a 10 to 50 wt-% solution in a solvent as indicated above. Typical commercially available Mg compound, especially dialkyl magnesium solutions are 20 - 40 wt-% solutions in toluene or heptanes.

The reaction for the preparation of the magnesium alkoxy compound may be carried out at a temperature of 40° to 70°C. Most suitable temperature is selected depending on the Mg compound and alcohol(s) used.

The transition metal compound of Group 4 to 6 is preferably a titanium compound, most preferably a titanium halide, like $TiCl_4$.

The internal donor (ID) used in the preparation of the catalyst used in the present invention is preferably selected from (di)esters of non-phthalic carboxylic (di)acids, 1,3-diethers, derivatives and mixtures thereof. Especially preferred donors are diesters of mono-unsaturated dicarboxylic acids, in particular esters belonging to a group comprising malonates, maleates, succinates, citraconates, glutarates, cyclohexene-1,2-dicarboxylates and benzoates, and any derivatives and/or mixtures thereof. Preferred examples are e.g. substituted maleates and citraconates, most preferably citraconates.

In emulsion method, the two phase liquid-liquid system may be formed by simple stirring and optionally adding (further) solvent(s) and additives, such as the turbulence minimizing agent (TMA) and/or the emulsifying agents and/or emulsion stabilizers, like surfactants, which are used in a manner known in the art for facilitating the formation of and/or stabilize the emulsion. Preferably, surfactants are acrylic or methacrylic polymers. Particular preferred are unbranched $C_{12}$ to $C_{20}$ (meth)acrylates such as poly(hexadecyl)-methacrylate and poly(octadecyl)-methacrylate and mixtures thereof. Turbulence minimizing agent (TMA), if used, is preferably selected from $\alpha$-olefin polymers of $\alpha$-olefin monomers with 6 to 20 carbon atoms, like polyoctene, polynonene, polydecene, polyundecene or polydodecene or mixtures thereof. Most preferable it is polydecene.

The solid particulate product obtained by precipitation or emulsion - solidification method may be washed at least once, preferably at least twice, most preferably at least three times with a aromatic and/or aliphatic hydrocarbons, preferably with toluene, heptane or pentane. The catalyst can further be dried, as by evaporation or flushing with nitrogen, or it can be slurried to an oily liquid without any drying step.

The finally obtained Ziegler-Natta catalyst is desirably in the form of particles having generally an average particle size range of 5 to 200 $\mu$m, preferably 10 to 100 $\mu$m. Particles are compact with low porosity and have surface area below 20 $g/m^2$, more preferably below 10 $g/m^2$. Typically the amount of Ti is 1 to 6 wt-%, Mg 10 to 20 wt-% and donor 10 to 40 wt-% of the catalyst composition.

Detailed description of preparation of catalysts is disclosed in WO 2012/007430, EP 2610271, EP 261027 and EP 2610272 which are incorporated here by reference.

The Ziegler-Natta catalyst (ZN-C) is preferably used in association with an alkyl aluminum cocatalyst and optionally external donors.

As further component in the instant polymerization process, an external donor (ED) is preferably present. Suitable external donors (ED) include certain silanes, ethers, esters, amines, ketones, heterocyclic compounds and blends of these. It is especially preferred to use a silane. It is most preferred to use silanes of the general formula

$R^a{}_pR^b{}_qSi(OR^c)_{(4-p-q)}$

wherein $R^a$, $R^b$ and $R^c$ denote a hydrocarbon radical, in particular an alkyl or cycloalkyl group, and wherein p and q are numbers ranging from 0 to 3 with their sum p + q being equal to orless than 3. $R^a$, $R^b$ and $R^c$ can be chosen independently from one another and can be the same or different. Specific examples of such silanes are (tert-butyl)$_2$Si(OCH$_3$)$_2$, (cyclohexyl)(methyl)Si(OCH$_3$)$_2$, (phenyl)$_2$Si(OCH$_3$)$_2$ and (cyclopentyl)$_2$Si(OCH$_3$)$_2$, or of general formula

$Si(OCH_2CH_3)_3(NR^3R^4)$

wherein R3 and R4 can be the same or different a represent a hydrocarbon group having 1 to 12 carbon atoms.

R3 and R4 are independently selected from the group consisting of linear aliphatic hydrocarbon group having 1 to 12 carbon atoms, branched aliphatic hydrocarbon group having 1 to 12 carbon atoms and cyclic aliphatic hydrocarbon group having 1 to 12 carbon atoms. It is in particular preferred that R3 and R4 are independently selected from the group consisting of methyl, ethyl, n-propyl, n-butyl, octyl, decanyl, iso-propyl, iso-butyl, iso-pentyl, tert.-butyl, tert.-amyl, neopentyl, cyclopentyl, cyclohexyl, methylcyclopentyl and cycloheptyl.

More preferably, both $R^3$ and $R^4$ are the same, yet more preferably both $R^3$ and $R^4$ are an ethyl group.

Especially preferred external donors (ED) are the dicyclopentyl dimethoxy silane donor (D donor) or the cyclohexylmethyl dimethoxy silane donor (C-Donor).

In addition to the Ziegler-Natta catalyst (ZN-C) and the optional external donor (ED) a cocatalyst can be used. The co-catalyst is preferably a compound of group 13 of the periodic table (IUPAC), e.g. organo aluminum, such as an aluminum compound, like aluminum alkyl, aluminum halide or aluminum alkyl halide compound. Accordingly, in one specific embodiment the co-catalyst (Co) is a trialkylaluminium, like triethylaluminium (TEAL), dialkyl aluminium chloride or alkyl aluminium dichloride or mixtures thereof. In one specific embodiment the co-catalyst (Co) is triethylaluminium (TEAL).

Preferably, the ratio between the co-catalyst (Co) and the external donor (ED) [Co/ED] and/or mthe ratio between the co-catalyst (Co) and the transition metal (TM) [CoATM] should be carefully chosen. Accordingly,

(a) the mol-ratio of co-catalyst (Co) to external donor (ED) [Co/ED] must be in the range from 5 to 45, preferably is in the range from 5 to 35, more preferably is in the range from 5 to 25;
and optionally
(b) the mol-ratio of co-catalyst (Co) to titanium compound (TC) [Co/TC] must be in the range from above 80 to 500, preferably is in the range from 100 to 350, still more preferably is in the range from 120 to 300.

As outlined above, the propylene homopolymer composition (H-PP) comprises a polymeric nucleating agent, comprising a monomermonomer (I) of the general formula

$H_2C{=}CH{-}CHR^1R^2$ (I)

wherein $R^1$ and $R^2$ are either individual alkyl groups with one or more carbon atoms or form an optionally substituted saturated, unsaturated or aromatic ring or a fused ring system containing 4 to 20 carbon atoms, whereby in case $R^1$ and $R^2$ form an aromatic ring, the hydrogen atom of the -CHR$^1$R$^2$ moiety is not present

Even more preferably, the monomer (I) of the polymeric nucleating agent is selected from the group consisting of vinyl cyclohexane, vinyl cyclopentane and 4-methylpent-1-ene, most preferably the monomer is vinylcyclohexane.

Whilst other monomers may be present in the polymeric nucleating agent, most commonly propylene monomers, it is preferred that the polymeric nucleating agent consists of monomers of the general formula (I).

In one particularly preferred embodiment, the polymeric nucleating agent is a homopolymer of vinyl cyclohexane (pVCH).

The polymeric nucleating agent is present in an amount in the range from 20 to 300 wt-ppm, more preferably 20 to 200 wt-ppm, most preferably 20 to 100 wt-ppm, relative to the total weight of the propylene homopolymer composition (H-PP).

The nucleating agent is introduced to the propylene homopolymer composition (H-PP) during the polymerization process of the propylene homopolymer composition (H-PP), i.e. is present as a reactor blend

The polymeric nucleating agent is preferably introduced to the first propylene homopolymer (H-PP1) by first polymerizing the above defined vinyl compound according to formula (I) as defined above, even more preferably vinyl

cyclohexane (VCH), in the presence of a catalyst system as described above, comprising a solid Ziegler Natta catalyst component, a cocatalyst and optional external donor, and the obtained reaction mixture of the polymer of the vinyl compound according to formula (I) as defined above, even more preferably vinyl cyclohexane (VCH) polymer, and the catalyst system is then used for producing the propylene homopolymer composition (H-PP).

A particularly preferred embodiment of the catalyst modification comprises the following steps:

- introducing a Ziegler-Natta type catalyst (ZN-C), as described above into the reaction medium,
- adding the co-catalyst (Co) and the external donor (ED),
- feeding monomer (I) to the agitated reaction medium at a weight ratio of 0.33 to 20, preferably 0.33 to 10, monomer (I)/catalyst,
- subjecting the vinyl compound to a polymerisation reaction in the presence of said Ziegler-Natta type catalyst (ZN-C), co-catalyst (Co) and external donor (ED) at a temperature of 35 to 65 °C, and
- continuing the polymerisation reaction until a maximum concentration of the unreacted monomer (I) of less than 2000, preferably less than 1000 wt-ppm by weight, is obtained,
- yielding a modified Ziegler-Natta catalyst system containing up to 20 grams of vinyl compound per one gram of solid catalyst.

The modified Ziegler-Natta catalyst comprises from 25 to 95 wt.-% of an isotactic polymer based on monomer (I), more preferably from 50 to 90 wt.-% of an isotactic polymer based on monomer (I), most preferably from 60 to 80 wt.-% of an isotactic polymer based on monomer (I).

Preferably, the ratio of polymeric nucleating agent to solid catalyst in the modified Ziegler-Natta catalyst ([pVCH]/[ZN]) is in the range from 0.33: 1 to 20: 1, more preferably in the range from 1.0:1 to 10: 1, most preferably in the range from 2.0:1 to 5.0:1

The polymerization of the vinyl compound, e. g. VCH, can be done in any inert fluid that does not dissolve the polymer formed (e. g. pVCH). It is important to make sure that the viscosity of the final catalyst/polymerized vinyl compound/inert fluid mixture is sufficiently high to prevent the catalyst particles from settling during storage and transport.

The adjustment of the viscosity of the mixture can be done either before or after the polymerization of the vinyl compound. It is, e. g., possible to carry out the polymerization in a low viscosity oil and after the polymerization of the vinyl compound the viscosity can be adjusted by addition of a highly viscous substance. Such highly viscous substance can be a "wax", such as an oil or a mixture of an oil with a solid or highly viscous substance (oil-grease). The viscosity of such a viscous substance is usually 1,000 to 15,000 cP at room temperature. The advantage of using wax is that the catalyst storing and feeding into the process is improved. Since no washing, drying, sieving and transferring are needed, the catalyst activity is maintained. The weight ratio between the oil and the solid or highly viscous polymer is preferably less than 5: 1. In addition to viscous substances, liquid hydrocarbons, such as isobutane, propane, pentane and hexane, can also be used as a medium in the modification step.

The polypropylenes produced with a catalyst modified with polymerized vinyl compounds contain essentially no free (unreacted) vinyl compounds. This means that the vinyl compounds shall be completely reacted in the catalyst modification step.

Further, the reaction time of the catalyst modification by polymerization of a vinyl compound should be sufficient to allow for complete reaction of the vinyl monomer, i. e. the polymerization is continued until the amount of unreacted vinyl compounds in the reaction mixture (including the polymerization medium and the reactants) is less than 0.5 wt.-%, in particular less than 2000 ppm by weight (shown by analysis). Thus, when the prepolymerized catalyst contains a maximum of about 0.1 wt.-% vinyl compound, the final vinyl compound content in the polypropylene will be below the limit of determination using the GC-MS method (< 0.01 ppm by weight). Generally, when operating on an industrial scale, a polymerization time of at least 30 minutes is required, preferably the polymerization time is at least 1 hour and in particular at least 5 hours. Polymerization times even in the range from 6 to 50 hours can be used. The modification can be done at temperatures of 10 to 70°C, preferably 35 to 65°C.

This catalyst modification step is known as BNT-technology and is performed during the above-described pre-polymerization step in order to introduce the polymeric nucleating agent.

General preparation of such modified catalyst system vinyl compound (I) is disclosed e.g. in EP 1 028 984 or WO 00/6831.

**Monophasic polypropylene composition (PC)**

The monophasic polypropylene composition (PC) according to the present invention comprises:

a) 55.0 to 95.0 wt.-%, relative to the total weight of the monophasic polypropylene composition (PC), of the random copolymer of propylene (R-PP) as described above; and

b) 5.0 to 45.0 wt.-%, relative to the total weight of the monophasic polypropylene composition (PC), of the propylene homopolymer composition (H-PP) as described above.

The combined weight of the random copolymer of propylene (R-PP) and the propylene homopolymer composition (H-PP) is at least 95 wt.-%, relative to the total weight of the monophasic polypropylene composition (PC).
It is further preferred that the monophasic polypropylene composition (PC) comprises:

a) 60.0 to 90.0 wt.-%, relative to the total weight of the monophasic polypropylene composition (PC), of the random copolymer of propylene (R-PP) as described above; and
b) 10.0 to 40.0 wt.-%, relative to the total weight of the monophasic polypropylene composition (PC), of the propylene homopolymer composition (H-PP) as described above.

It is yet further preferred that the monophasic polypropylene composition (PC) comprises:

a) 65.0 to 80.0 wt.-%, relative to the total weight of the monophasic polypropylene composition (PC), of the random copolymer of propylene (R-PP) as described above; and
b) 20.0 to 35.0 wt.-%, relative to the total weight of the monophasic polypropylene composition (PC), of the propylene homopolymer composition (H-PP) as described above.

In addition to the random copolymer of propylene (R-PP) and the propylene homopolymer composition (H-PP), the monophasic polypropylene composition (PC) may comprise further additives known in the art; however, this remaining part shall be not more than 5.0 wt.-%, like not more than 3.0 wt.-% within the monophasic polypropylene composition (PC). For instance, the monophasic polypropylene composition (PC) may comprises additionally small amounts of additives (A) selected from the group consisting of antioxidants, stabilizers, fillers, colorants, nucleating agents and antistatic agents. In general, they may be incorporated during the mechanical blending of the random copolymer of propylene (R-PP) and the propylene homopolymer composition (H-PP).
Such additives are generally commercially available and are described, for example, in "Plastic Additives Handbook", pages 871 to 873, 5th edition, 2001 of Hans Zweifel.
It is understood that the content of additives (A), given with respect to the total weight of the monophasic polyolefin composition (PC), includes any carrier polymers used to introduce the additives to said monophasic polyolefin composition (PC), i.e. masterbatch carrier polymers. An example of such a carrier polymer would be a polypropylene homopolymer in the form of powder.
In one particular embodiment, the monophasic polypropylene composition (PC) consists of the random copolymer of propylene (R-PP), the propylene homopolymer composition (H-PP), and optionally additives (A).
As a part of the propylene homopolymer composition (H-PP), the monophasic polypropylene composition (PC) comprises the polymeric nucleating agent as defined above. In addition to the polymeric nucleating agent present in the propylene homopolymer composition, further polymeric nucleating agent may or may not be present in the monophasic polypropylene composition. It is preferred that the total content of polymeric nucleating agents containing monomer(s) according to general formula (I) is in the range from 1.0 to 100 wt-ppm, more preferably in the range from 1.5 to 50 wt-ppm, most preferably in the range from 2.0 to 20 wt-ppm, relative to the total weight of the monophasic polypropylene composition (PC).
As the monophasic polypropylene composition (PC) is not a heterophasic system comprising an elastomeric rubber layer, the monophasic polypropylene composition (PC) preferably does not have a glass transition temperature below -30°C, more preferably does not have a glass transition temperature below -25 °C, most preferably does not have a glass transition temperature below -20 °C.
The monophasic polypropylene composition (PC) has a melt flow rate ($MFR_2$), measured according to ISO 1133 at 230 °C and 2.16 kg, in the range from 1.0 to 50.0 g/10 min, more preferably in the range from 4.0 to 30.0 g/10 min, most preferably in the range from 6.0 to 15.0 g/10 min.
The monophasic polypropylene composition (PC) preferably has a total comonomer content C(PC), as determined by quantitative $^{13}$C-NMR spectroscopy, in the range from 0.5 to 4.0 mol-%, more preferably in the range from 0.7 to 3.5 mol-%, most preferably in the range from 0.9 to 3.0 mol-%.
It is further preferred that the monophasic polypropylene composition (PC) is free of phthalic esters and their decomposition products.
The monophasic polypropylene composition (PC) preferably has a flexural modulus, determined according to ISO 178 on 80x10x4 $mm^3$ test bars injection moulded in line with ISO 19069-2, in the range from 1100 to 1900 MPa, more preferably in the range from 1200 to 1700 MPa, most preferably in the range from 1320 to 1500 MPa.
The monophasic polypropylene composition (PC) preferably has a haze value, determined on plaques with dimensions 60 x 60 x 3 $mm^3$ machined from injection-molded plaques and measured according to ASTM D1003, in the

range from 5 to 30%, more preferably in the range from 10 to 28%, most preferably in the range from 15 to 26%.

The monophasic polypropylene composition (PC) preferably has at least two observable melting peaks in a differential scanning calorimetry (DSC) curve, according to ISO 11357 / part 3 / method C2 in a heat / cool / heat cycle with a scan rate of 10 °C/min in the temperature range of -30 to +225 °C, wherein the monophasic polypropylene composition has a first melting temperature $T_{m1}$, a first heat of fusion $H_{m1}$, a second melting temperature $T_{m2}$, and a second heat of fusion $H_{m2}$.

The first melting temperature $T_{m1}$ is preferably in the range from 145 to 159 °C, more preferably in the range from 150 to 159 °C, most preferably in the range from 154 to 159 °C.

The first heat of fusion $H_{m1}$ is preferably in the range from 20 to 100 J/g, more preferably in the range from 50 to 97 J/g, most preferably in the range from 80 to 95 J/g.

The second melting temperature $T_{m2}$ is preferably in the range from 125 to 136°C, more preferably in the range from 128 to 136 °C, most preferably in the range from 130 to 135 °C.

The second heat of fusion $H_{m2}$ in the range from 2.0 to 70 J/g, more preferably in the range from 2.0 to 40 J/g, most preferably in the range from 2.0 to 10 J/g.

The monophasic polypropylene composition (PC) preferably has a crystallisation temperature $T_c$ in the range from 115 to 130 °C, more preferably in the range from 117 to 127 °C, most preferably in the range from 119 to 125 °C

**Article**

The present invention is further directed to an article comprising the monophasic polypropylene composition (PC) as described above.

The article comprises from 90 to 100 wt.-%, more preferably from 95 to 100 wt.-%, yet more preferably in the range from 98 to 100 wt.-% of the monophasic polypropylene composition (PC).

The article is preferably selected from the group consisting of injection-moulded articles, thermoformed articles and films.

**EXAMPLES**

A. Measuring methods

The following definitions of terms and determination methods apply for the above general description of the invention including the claims as well as to the below examples unless otherwise defined.

Quantification of microstructure by NMR spectroscopy

Quantitative nuclear-magnetic resonance (NMR) spectroscopy was used to quantify the isotacticity and regio-regularity of the propylene homopolymers.

Quantitative $^{13}C\{^1H\}$ NMR spectra were recorded in the solution-state using a Bruker Advance III 400 NMR spectrometer operating at 400.15 and 100.62 MHz for $^1H$ and $^{13}C$ respectively. All spectra were recorded using a $^{13}C$ optimised 10 mm extended temperature probehead at 125°C using nitrogen gas for all pneumatics.

For propylene homopolymers approximately 200 mg of material was dissolved in 1,2-tetrachloroethane-$d_2$ (TCE-$d_2$). To ensure a homogenous solution, after initial sample preparation in a heat block, the NMR tube was further heated in a rotatary oven for at least 1 hour. Upon insertion into the magnet the tube was spun at 10 Hz. This setup was chosen primarily for the high resolution needed fortacticity distribution quantification (Busico, V., Cipullo, R., Prog. Polym. Sci. 26 (2001) 443; Busico, V.; Cipullo, R., Monaco, G., Vacatello, M., Segre, A.L., Macromolecules 30 (1997) 6251). Standard single-pulse excitation was employed utilising the NOE and bi-level WALTZ16 decoupling scheme (Zhou, Z., Kuemmerle, R., Qiu, X., Redwine, D., Cong, R., Taha, A., Baugh, D. Winniford, B., J. Mag. Reson. 187 (2007) 225; Busico, V., Carbonniere, P., Cipullo, R., Pellecchia, R., Severn, J., Talarico, G., Macromol. Rapid Commun. 2007, 28, 11289). A total of 8192 (8k) transients were acquired per spectra.

Quantitative $^{13}C\{^1H\}$ NMR spectra were processed, integrated and relevant quantitative properties determined from the integrals using proprietary computer programs.

For propylene homopolymers all chemical shifts are internally referenced to the methyl isotactic pentad (mmmm) at 21.85 ppm.

Characteristic signals corresponding to regio defects (Resconi, L., Cavallo, L., Fait, A., Piemontesi, F., Chem. Rev. 2000, 100, 1253; Wang, W-J., Zhu, S., Macromolecules 33 (2000), 1157; Cheng, H. N., Macromolecules 17 (1984), 1950) or comonomer were observed.

The tacticity distribution was quantified through integration of the methyl region between 23.6-19.7 ppm correcting for any sites not related to the stereo sequences of interest (Busico, V., Cipullo, R., Prog. Polym. Sci. 26 (2001)

443; Busico, V., Cipullo, R., Monaco, G., Vacatello, M., Segre, A.L., Macromolecules 30 (1997) 6251).

Specifically the influence of regio-defects and comonomer on the quantification of the tacticity distribution was corrected for by subtraction of representative regio-defect and comonomer integrals from the specific integral regions of the stereo sequences.

The isotacticity was determined at the pentad level and reported as the percentage of isotactic pentad (mmmm) sequences with respect to all pentad sequences:

$$[mmmm]\ \% = 100 * (mmmm / \text{sum of all pentads})$$

The presence of 2,1 erythro regio-defects was indicated by the presence of the two methyl sites at 17.7 and 17.2 ppm and confirmed by other characteristic sites. Characteristic signals corresponding to other types of regio-defects were not observed (Resconi, L., Cavallo, L., Fait, A., Piemontesi, F., Chem. Rev. 2000, 100, 1253).

The amount of 2,1 erythro regio-defects was quantified using the average integral of the two characteristic methyl sites at 17.7 and 17.2 ppm:

$$P_{21e} = (I_{e6} + I_{e8}) / 2$$

The amount of 1,2 primary inserted propene was quantified based on the methyl region with correction undertaken for sites included in this region not related to primary insertion and for primary insertion sites excluded from this region:

$$P_{12} = I_{CH3} + P_{12e}$$

The total amount of propene was quantified as the sum of primary inserted propene and all other present regio-defects:

$$P_{total} = P_{12} + P_{21e}$$

The mole percent of 2,1 erythro regio-defects was quantified with respect to all propene:

$$[21e]\ mol\text{-}\% = 100 * (P_{21e} / P_{total})$$

The comonomer fraction was quantified using the method of Wang et. al. (Wang, W-J., Zhu, S., Macromolecules 33 (2000), 1157) through integration of multiple signals across the whole spectral region in the $^{13}C\{^{1}H\}$ spectra. This method was chosen for its robust nature and ability to account for the presence of regio-defects when needed. Integral regions were slightly adjusted to increase applicability across the whole range of encountered comonomer contents.

For systems where only isolated ethylene in PPEPP sequences was observed the method of Wang et. al. was modified to reduce the influence of non-zero integrals of sites that are known to not be present. This approach reduced the overestimation of ethylene content for such systems and was achieved by reduction of the number of sites used to determine the absolute ethylene content to:

$$E = 0.5(S\beta\beta + S\beta\gamma + S\beta\delta + 0.5(S\alpha\beta + S\alpha\gamma))$$

Through the use of this set of sites the corresponding integral equation becomes:

$$E = 0.5(I_H + I_G + 0.5(I_C + I_D))$$

using the same notation used in the article of Wang et. al. (Wang, W-J., Zhu, S., Macromolecules 33 (2000), 1157). Equations used for absolute propylene content were not modified.

The mole percent comonomer incorporation was calculated from the mole fraction:

$$E\ [mol\text{-}\%] = 100 * fE$$

The weight percent comonomer incorporation was calculated from the mole fraction:

$$E\ [wt.\text{-}\%] = 100 * (fE * 28.06) / ((fE * 28.06) + ((1\text{-}fE) * 42.08))$$

**$MFR_2$ (230 °C)** is measured according to ISO 1133 (230 °C, 2.16 kg load)

**Number average molecular weight ($M_n$), weight average molecular weight ($M_w$) and molecular weight distribution (MWD)**

Molecular weight averages (Mw, Mn), and the molecular weight distribution (MWD), i.e. the Mw/Mn (wherein Mn is the number average molecular weight and Mw is the weight average molecular weight), were determined by Gel Permeation Chromatography (GPC) according to ISO 16014-4:2003 and ASTM D 6474-99. A PolymerChar GPC instrument, equipped with infrared (IR) detector was used with 3 x Olexis and Ix Olexis Guard columns from Polymer Laboratories and 1 ,2,4-trichlorobenzene (TCB, stabilized with 250 mg/L 2,6-Di tert butyl-4-methyl-phenol) as solvent at 160 °C and at a constant flow rate of 1 mL/min. 200 µl. of sample solution were injected per analysis. The column set was calibrated using universal calibration (according to ISO 16014-2:2003) with at least 15 narrow MWD polystyrene (PS) standards in the range from 0,5 kg/mol to 11 500 kg/mol. Mark Houwink constants for PS, PE and PP used are as described per ASTM D 6474-99. All samples were prepared by dissolving 5.0 - 9.0 mg of polymer in 8 mL (at 160 °C) of stabilized TCB (same as mobile phase) for 2.5 hours for PP or 3 hours for PE at max. 160°C under continuous gentle shaking in the autosampler of the GPC instrument.

**The xylene soluble fraction at room temperature (XCS, wt.-%):** The amount of the polymer soluble in xylene is determined at 25 °C according to ISO 16152; 5th edition; 2005-07-01.

**DSC analysis, melting temperature ($T_m$) and heat of fusion (Hε), crystallization temperature ($T_c$) and heat of crystallization ($H_c$):** measured with a TA Instrument Q200 differential scanning calorimetry (DSC) on 5 to 7 mg samples. DSC is run according to ISO 11357 / part 3 /method C2 in a heat / cool / heat cycle with a scan rate of 10 °C/min in the temperature range of -30 to +225°C. Crystallization temperature ($T_c$) and heat of crystallization ($H_c$) are determined from the cooling step, while melting temperature ($T_m$) and heat of fusion ($H_f$) are determined from the second heating step.

The glass transition temperature Tg is determined by dynamic mechanical analysis according to ISO 6721-7. The measurements are done in torsion mode on compression moulded samples (40x10x1 $mm^3$) between -100 °C and +150 °C with a heating rate of 2 °C/min and a frequency of 1 Hz.

**The Flexural Modulus** is determined according to ISO 178 method A (3-point bending test) on 80 mm × 10 mm × 4 mm specimens. Following the standard, a test speed of 2 mm/min and a span length of 16 times the thickness was used. The testing temperature was 23±2° C. Injection moulding was carried out according to ISO 19069-2 using a melt temperature of 200°C for all materials irrespective of material melt flow rate.

**Haze** is determined on plaques with dimensions 60 × 60 × 1 $mm^3$ machined from injection-molded plaques and measured according to ASTM D1003.

**B. Examples**

The catalyst used in the polymerization process for R-PP1 was rac-anti-dimethylsilandiyl(2-methyl-4-phenyl-5-methoxy-6-*tert*-butyl-indenyl)(2-methyl-4-(4-*tert*-butylphenyl)indenyl)zirconium dichloride, as disclosed in WO 2020/245251 A1 as D1. The metallocene catalyst was produced analogously to D1, as used for the preparation of IE1 and IE2 of Table 5 in WO 2020/245251 A1.

The catalyst used in the polymerization process for R-PP2 was *Anti*-dimethylsilanediyl[2-methyl-4,8-di(3,5-dimethylphenyl)-1,5,6,7-tetrahydro-*s*-indacen-1-yl][2-methyl-4-(3,5-dimethylphenyl)-5-methoxy-6-*tert*-butylinden-1-yl] zirconium dichloride as disclosed in WO 2019/179959 A1 as MC-2. The supported metallocene catalyst was produced analogously to IE2 in WO 2019/179959 A1.

The catalyst used in the polymerization process for H-PP1 was an emulsion-type Ziegler-Natta catalyst, being identical to of the catalyst employed in the polymerisation of the inventive examples of WO 2017/148970 A1, with the exception that 15.0 g of vinylcyclohexane (VCH) were added in the modification step instead of the 5.0 g used in WO 2017/148970 A1.

In this catalyst, the internal donor is a citraconate, the ZN-C:VCH ratio is 1:3 and the external donor is di(cyclopentyl) dimethoxy silane (D-donor).

R-PP3 is commercially available from Borealis AG under the trade name RF490MO. Properties of the commercial grade are given in Table 2

R-PP4 is commercially available from Borealis AG under the trade name RD734MO. Properties of the commercial grade are given in Table 2.

Both R-PP3 and R-PP4 were polymerized using Ziegler-Natta catalysts. R-PP3 contains pVCH, as the catalyst had been prepolymerized with VCH, whereas R-PP4 is free of pVCH

R-PP1, R-PP2 and H-PP1 were polymerised according to the conditions given in Table 1.

**Table 1:** Polymerisation conditions of the inventive propylene homopolymer and copolymers

| | | R-PP1 | R-PP2 | H-PP1 |
|---|---|---|---|---|
| **Prepolymerization (R0)** | | | | |
| Temperature | [°C] | 20 | 25 | 20 |
| Pressure | [kPa] | 5264 | 5100 | 5300 |
| Donor feed | [g/t(C3)] | n/a | n/a | 40 |
| TEAL feed | [g/t(C3)] | n/a | n/a | 180 |
| H2 feed | [g/h] | 2.8 | 0.10 | 1.0 |
| **Loop (R1)** | | | | |
| Temperature | [°C] | 70 | 65 | 70 |
| Pressure | [kPa] | 5258 | 5100 | 5400 |
| H2/C3 ratio | [mol/kmol] | 0.3 | 0.08 | 10.9 |
| C6/C3 ratio | [mol/kmol] | 0.0 | 44.4 | 0.0 |
| C2/C3 ratio | [mol/kmol] | 25.4 | 0.0 | 0.0 |
| split | [wt.-%] | 57 | 39 | 47 |
| $MFR_2$ | [g/10 min] | 8.0 | 6.6 | 142 |
| C6 content | [mol-%] | 0.0 | 0.6 | 0.0 |
| C2 content | [mol-%] | 3.0 | 0.0 | 0.0 |
| **GPR (R2)** | | | | |
| Temperature | [°C] | 80 | 80 | 80 |
| Pressure | [kPa] | 2500 | 2400 | 2500 |
| H2/C3 ratio | [mol/kmol] | 3.3 | 1.2 | 46.4 |
| C6/C3 ratio | [mol/kmol] | 0.0 | 5.1 | 0.0 |
| C2/C3 ratio | [mol/kmol] | 117.8 | 0.0 | 0.0 |
| split | [wt.-%] | 43 | 61 | 53 |
| $MFR_2$ | [g/10min] | 8.0 | 6.6 | 64 |
| C6 content | [mol-%] | 0.0 | 1.4 | 0.0 |
| C2 content | [mol-%] | 3.8 | 0.0 | 0.0 |

**Table 2:** Polymer properties of the inventive propylene homopolymer and the inventive and comparative propylene copolymers

| | | R-PP1 | R-PP2 | H-PP1 | R-PP3 | R-PP4 |
|---|---|---|---|---|---|---|
| **Polymer properties** | | | | | | |
| XCS | [wt.-%] | 1.3 | 0.9 | 1.8 | 3.5 | 5.6 |

(continued)

| | | R-PP1 | R-PP2 | H-PP1 | R-PP3 | R-PP4 |
|---|---|---|---|---|---|---|
| **Polymer properties** | | | | | | |
| $MFR_2$ | [g/10min] | 8.0 | 6.6 | 64 | 20 | 8.0 |
| C6 content | [mol-%] | 0.0 | 1.4 | 0.0 | 0.0 | 0.0 |
| C2 content | [mol-%] | 3.8 | 0.0 | 0.0 | 4.3 | 3.6 |
| Mw/Mn (GPC) | - | 3.1 | 2.9 | 6.5 | 7.2 | 6.4 |
| Mw | [g/mol] | 222,000 | 252,500 | 141,000 | 183,500 | 251,500 |
| Mn | [g/mol] | 71,600 | 87,100 | 21,700 | 25,500 | 39,300 |
| Tm | [°C] | 140 | 137 | 166 | 153 | 148 |
| Tc | [°C] | 99 | 101 | 130 | 121 | 108 |
| Tg | [°C] | -3.0 | -1.0 | 0.1 | -2.5 | -2.2 |
| 2,1-regiodefects | [mol-%] | 0.53 | 0.53 | 0.0 | 0.0 | 0.0 |
| Isotacticity (mmmm) | [%] | n.m. | n.m. | 95.5 | n.m. | n.m. |

**Table 3:** Compositional, mechanical and optical properties of the inventive and comparative monophasic polypropylene compositions

| | | IE1 | IE2 | IE3 | CE1 | CE2 | CE3 |
|---|---|---|---|---|---|---|---|
| R-PP1 | [wt.-%] | 70 | - | - | - | - | - |
| R-PP2 | [wt.-%] | - | 70 | 85 | - | - | - |
| R-PP3 | [wt.-%] | - | - | - | 99.83 | - | - |
| R-PP4 | [wt.-%] | - | - | - | - | 70 | 69.83 |
| H-PP1 | [wt.-%] | 30 | 30 | 15 | - | 30 | 30 |
| DMDBS | [wt.-%] | - | - | - | 0.17 | - | 0.17 |
| pVCH | [wt-ppm] | 7.2 | 7.2 | 3.6 | 15 | 7.2 | 7.2 |
| $MFR_2$ | [g/10 min] | 11 | 8.0 | 8.0 | 20 | 14 | 14 |
| C2 content | [mol-%] | 2.7 | 0.0 | 0.0 | 4.3 | 2.5 | 2.5 |
| C6 content | [mol-%] | 0.0 | 1.0 | 1.2 | 0.0 | 0.0 | 0.0 |
| Flex Mod | [MPa] | 1350 | 1360 | 1220 | 1300 | 1400 | 1420 |
| Haze | [%] | 24 | 25 | 26 | 27 | 33 | 21 |
| Tc | [°C] | 125 | 123 | 119 | 122 | 126 | 127 |
| Tm1 | [°C] | 158 | 154 | 148 | 153 | 160 | 161 |
| Tm2 | [°C] | 130 | 134 | 131 | 137 | - | - |
| Hm1 | [J/g] | 88 | 93 | 83 | 99 | 100 | 99 |
| Hm2 | [J/g] | 7 | 3 | 5 | 1 | - | - |

As can be seen from Table 3, the inventive compositions IE1 to IE3, being blends of SSC-catalysed R-PP and ZN-catalysed H-PP have considerably lower haze than that of a comparable blend wherein the R-PP has been ZN-catalysed (CE2). Furthermore, high stiffness is demonstrated by each of the inventive examples. CE1 represents an attempt to replicate the advantageous stiffness/optical properties balance, however without the inventive blend of SSC-catalysed R-PP and ZN-catalysed H-PP, it is necessary to employ 1700 wt-ppm of a further small molecule nucleating agent, the effect of which can be seen by comparing CE2 (without the further nucleating agent) and CE3 (with the nucleating agent). It is clear that R-PP3 without the nucleating agent would have a notably inferior haze value. Avoiding such small molecule nucleating agents has advantages from a process perspective; however, should further improvements be required, the inventive examples could, of course, be further nucleated.

It is generally understood that haze tends to decrease with increasing comonomer content; therefore, it is a surprising finding that the inventive examples have lower haze values than that of CE1, even though the comonomer content is lower. Likewise, the comonomer content of CE2 is very similar; however, the haze is much worse, indicating the importance of the SSC-catalysed R-PP.

Furthermore, the low $MFR_2$ of the inventive examples is beneficial for many applications, for example thermoforming.

## Claims

1. A monophasic polypropylene composition (PC), having a melt flow rate ($MFR_2$), measured according to ISO 1133 at 230 °C and 2.16 kg, in the range from 1.0 to 50.0 g/10 min, wherein the monophasic polypropylene composition (PC) comprises:

   a) 55.0 to 95.0 wt.-%, relative to the total weight of the monophasic polypropylene composition (PC), of a random copolymer of propylene (R-PP) and at least one comonomer selected from ethylene and $C_4$ to $C_8$ alpha olefins, having a melt flow rate ($MFR_2$), measured according to ISO 1133 at 230 °C and 2.16 kg, in the range from 1.0 to 30.0 g/10 min, a comonomer content, as determined by quantitative $^{13}C$-NMR spectroscopy, in the range from 0.5 to 6.0 mol-%, and a content of 2,1-regiodefects as determined by $^{13}C$-NMR spectroscopy in the range from 0.1 to 1.4 mol-%; and
   b) 5.0 to 45.0 wt.-%, relative to the total weight of the monophasic polypropylene composition (PC), of a propylene homopolymer composition (H-PP), comprising a reactor blend of a propylene homopolymer and a polymeric nucleating agent that is present in an amount in the range from 20 to 300 wt-ppm, relative to the total weight of the propylene homopolymer composition (H-PP), wherein the propylene homopolymer composition (H-PP) has a melt flow rate ($MFR_2$), measured according to ISO 1133 at 230 °C and 2.16 kg, in the range from 10 to 100 g/10 min and is free from 2,1-regiodefects as determined by $^{13}C$-NMR spectroscopy;
   wherein the combined weight of the random copolymer of propylene (R-PP) and the propylene homopolymer composition (H-PP) is at least 95 wt.-%, relative to the total weight of the monophasic polypropylene composition (PC), and
   the polymeric nucleating agent comprises a monomer (I) of the general formula

   $$H_2C=CH-CHR^1R^2 \qquad (I)$$

   wherein $R^1$ and $R^2$ are either individual alkyl groups with one or more carbon atoms or form an optionally substituted saturated, unsaturated or aromatic ring or a fused ring system containing 4 to 20 carbon atoms, whereby in case $R^1$ and $R^2$ form an aromatic ring, the hydrogen atom of the $-CHR^1R^2$ moiety is not present.

2. The monophasic polypropylene composition (PC) according to claim 1 or claim 2, wherein the monomer (I) of the polymeric nucleating agent is selected from the group consisting of vinyl cyclohexane, vinyl cyclopentane and 4-methylpent-1-ene, most preferably the monomer is vinylcyclohexane.

3. The monophasic polypropylene composition (PC) according to any one of the preceding claims, wherein the monophasic polypropylene composition (PC) does not have a glass transition temperature below -30 °C, more preferably does not have a glass transition temperature below -25 °C, most preferably does not have a glass transition temperature below -20 °C.

4. The monophasic polypropylene composition (PC) according to any one of the preceding claims, wherein the monophasic polypropylene composition (PC) comprises 60.0 to 90.0 wt.-% of the random copolymer of propylene (R-PP) 10.0 to 40.0 of the propylene homopolymer composition (H-PP), more preferably the monophasic polypropylene composition (PC) comprises 65.0 to 80.0 wt.-% of the random copolymer of propylene (R-PP) 20.0 to 35.0 of the propylene homopolymer composition (H-PP).

5. The monophasic polypropylene composition (PC) according to any one of the preceding claims, wherein the propylene homopolymer composition (H-PP) has a xylene cold soluble content (XCS), as determined at 25 °C according to ISO 16152, in the range of 0.5 to 4.0 wt.-%, more preferably in the range from 1.0 to 3.0 wt.-%, most preferably in the range from 1.5 to 2.0 wt.-%, and/or
wherein the random copolymer of propylene (R-PP) has a xylene cold soluble content (XCS), as determined at 25 °C according to ISO 16152, in the range of 0.5 to 15.0 wt.-%, more preferably in the range from 0.6 to 8.0 wt.-%, most preferably in the range from 0.7 to 3.0 wt.-%.

**6.** The monophasic polypropylene composition (PC) according to any one of the preceding claims, having a total comonomer content C(PC), as determined by quantitative $^{13}$C-NMR spectroscopy, in the range from 0.5 to 4.0 mol-%, more preferably in the range from 0.7 to 3.5 mol-%, most preferably in the range from 0.9 to 3.0 mol-%.

**7.** The monophasic polypropylene composition (PC) according to any one of the preceding claims, wherein the propylene homopolymer composition (H-PP) is free of phthalic esters and their decomposition products, more preferably the monophasic polypropylene composition (PC) is free of phthalic esters and their decomposition products.

**8.** The monophasic polypropylene composition (PC) according to any one of the preceding claims, wherein the random copolymer of propylene (R-PP) is a propylene-ethylene random copolymer having an ethylene content in the range from 2.0 to 6.0 mol-%, more preferably in the range from 2.5 to 5.0 mol-%, most preferably in the range from 3.0 to 4.0 mol-%.

**9.** The monophasic polypropylene composition (PC) according to claim 8, wherein the propylene-ethylene random copolymer comprises:

a) 51.0 to 75.0 wt.-%, relative to the total weight of the propylene-ethylene random copolymer, of a first propylene-ethylene random copolymer fraction (R-PP1) having an ethylene content, as determined by quantitative $^{13}$C-NMR spectroscopy, in the range from 2.0 to 4.0 mol-%, more preferably in the range from 2.4 to 3.6 mol-%, most preferably in the range from 2.7 to 3.3 mol-%; and
b) 25.0 to 49.0 wt.-%, relative to the total weight of the propylene-ethylene random copolymer, of a second propylene-ethylene random copolymer fraction (R-PP2) having an ethylene content, as determined by quantitative $^{13}$C-NMR spectroscopy, in the range from 3.0 to 7.0 mol-%, more preferably in the range from 4.0 to 6.0 mol-%, most preferably in the range from 4.5 to 5.5 mol-%,

wherein the combined weight of the first and second propylene-ethylene random copolymer fractions (R-PP1+R-PP2) is at least 95 wt.-%, relative to the total weight of the propylene-ethylene random copolymer (R-PP) and the ratio of the ethylene content of the propylene-ethylene random copolymer to the ethylene content of the first propylene-ethylene random copolymer fraction, [C2(R-PP)]/[C2(R-PP1)], is preferably in the range from 1.10 to 2.00, more preferably in the range from 1.15 to 1.70, most preferably in the range from 1.20 to 1.40.

**10.** The monophasic polypropylene composition (PC) according to any one of claims 1 to 8, wherein the random copolymer of propylene (R-PP) is a random copolymer of propylene and a comonomer selected from $C_4$ to $C_8$ alpha olefins, more preferably a random copolymer of propylene and 1-hexene, having a comonomer content, as determined by quantitative $^{13}$C-NMR spectroscopy, in the range from 0.5 to 3.0 mol-%, more preferably in the range from 0.8 to 2.0 mol-%, most preferably in the range from 1.0 to 1.5 mol-%.

**11.** The monophasic polypropylene composition (PC) according to claim 10, 1, wherein the random copolymer of propylene and a comonomer selected from $C_4$ to $C_8$ alpha olefins, more preferably the random copolymer of propylene and 1-hexene, comprises:

a) 25.0 to 45.0 wt.-%, relative to the total weight of the propylene random copolymer, of a first propylene random copolymer fraction (R-PP1) having a comonomer content, as determined by quantitative $^{13}$C-NMR spectroscopy, in the range from 0.1 to 1.0 mol-%, more preferably in the range from 0.3 to 0.9 mol-%, most preferably in the range from 0.5 to 0.8 mol-%; and
b) 55.0 to 75.0 wt.-%, relative to the total weight of the propylene random copolymer, of a second propylene random copolymer fraction (R-PP2) having a comonomer content, as determined by quantitative $^{13}$C-NMR spectroscopy, in the range from 1.0 to 4.0 mol-%, more preferably in the range from 1.3 to 3.0 mol-%, most preferably in the range from 1.5 to 2.0 mol-%,

wherein the combined weight of the first and second propylene random copolymer fractions (R-PP1+R-PP2) is at

least 95 wt.-%, relative to the total weight of the propylene random copolymer (R-PP) and the ratio of the comonomer content of the propylene random copolymer to the comonomer content of the first propylene random copolymer fraction, [C(R-PP)]/[C(R-PP1)], is preferably in the range from 1.5 to 3.0, more preferably in the range from 1.8 to 2.7, most preferably in the range from 2.0 to 2.5.

**12.** The monophasic polypropylene composition (PC) according to any one of the preceding claims, wherein the propylene homopolymer composition (H-PP) has either of, preferably both of, the following properties:

i) a melting temperature $T_m$ in the range from 160 to 175 °C, more preferably in the range from 162 to 172 °C, most preferably in the range from 164 to 169 °C; and
ii) a crystallisation temperature $T_c$ in the range from 125 to 135 °C, more preferably in the range from 127 to 133 °C, most preferably in the range from 128 to 132 °C;

wherein both $T_m$ and $T_c$ are determined by differential scanning calorimetry (DSC) according to ISO 11357 / part 3 / method C2 in a heat / cool / heat cycle with a scan rate of 10 °C/min in the temperature range of -30 to +225 °C, and/or wherein the random copolymer of propylene (R-PP) has either of, preferably both of, the following properties:

i) a melting temperature $T_m$ in the range from 132 to 144 °C, more preferably in the range from 134 to 142 °C, most preferably in the range from 136 to 140 °C; and
ii) a crystallisation temperature $T_c$ in the range from 95 to 105 °C, more preferably in the range from 97 to 103 °C, most preferably in the range from 98 to 102 °C;

wherein both $T_m$ and $T_c$ are determined by differential scanning calorimetry (DSC) according to ISO 11357 / part 3 / method C2 in a heat / cool / heat cycle with a scan rate of 10 °C/min in the temperature range of -30 to +225 °C.

**13.** The monophasic polypropylene composition (PC) according to any one of the preceding claims, having at least one, preferably both of, the following properties:

i) a flexural modulus, determined according to ISO 178 on 80x10x4 $mm^3$ test bars injection moulded in line with ISO 19069-2, in the range from 1100 to 1900 MPa, more preferably in the range from 1200 to 1700 MPa, most preferably in the range from 1320 to 1500 MPa; and
ii) a haze value, determined on plaques with dimensions $60 \times 60 \times 3$ $mm^3$ machined from injection-molded plaques and measured according to ASTM D1003, in the range from 5 to 30%, more preferably in the range from 10 to 28%, most preferably in the range from 15 to 26%.

**14.** The monophasic polypropylene composition (PC) according to any one of the preceding claims, having at least two observable melting peaks in a differential scanning calorimetry (DSC) curve, according to ISO 11357 / part 3 / method C2 in a heat / cool / heat cycle with a scan rate of 10 °C/min in the temperature range of -30 to +225 °C, wherein the monophasic polypropylene composition has a first melting temperature $T_{m1}$, a first heat of fusion $H_{m1}$, a second melting temperature $T_{m2}$, and a second heat of fusion $H_{m2}$, at least one of which, preferably all of which, fall within the following ranges:

i) a first melting temperature $T_{m1}$ in the range from 145 to 159 °C, more preferably in the range from 150 to 159 °C, most preferably in the range from 154 to 159 °C;
ii) a first heat of fusion $H_{m1}$ in the range from 20 to 100 J/g, more preferably in the range from 50 to 97 J/g, most preferably in the range from 80 to 95 J/g;
iii) a second melting temperature $T_{m2}$ in the range from 125 to 136 °C, more preferably in the range from 128 to 136 °C, most preferably in the range from 130 to 135 °C; and
iv) a second heat of fusion $H_{m2}$ in the range from 2.0 to 70 J/g, more preferably in the range from 2.0 to 40 J/g, most preferably in the range from 2.0 to 10 J/g.

**15.** An article comprising the monophasic polypropylene composition (PC) according to any one of the preceding claims in an amount in the range from 90 to 100 wt.-%, more preferably in the range from 95 to 100 wt.-%, yet more preferably in the range from 98 to 100 wt.-%, wherein the article is preferably selected from the group consisting of injection-moulded articles, thermoformed articles and films.

**Patentansprüche**

1. Monophasische Polypropylenzusammensetzung (PC) mit einer Schmelzefließrate ($MFR_2$), gemessen gemäß ISO 1133 bei 230°C und 2,16 kg, im Bereich von 1,0 bis 50,0 g/10 min, wobei die monophasische Polypropylenzusammensetzung (PC) umfasst:

   a) 55,0 bis 95,0 Gew.-%, bezogen auf das Gesamtgewicht der monophasischen Polypropylenzusammensetzung (PC), eines statistischen Copolymers aus Propylen (R-PP) und mindestens einem Comonomer, ausgewählt aus Ethylen und $C_4$- bis $C_8$-alpha-Olefinen, mit einer Schmelzefließrate ($MFR_2$), gemessen gemäß ISO 1133 bei 230°C und 2,16 kg, im Bereich von 1,0 bis 30,0 g/10 min, einem Comonomergehalt, wie bestimmt durch quantitative $^{13}C$-NMR-Spektroskopie, im Bereich von 0,5 bis 6,0 Mol-% und einem Gehalt an 2,1-Regiodefekten, wie bestimmt durch $^{13}C$-NMR-Spektroskopie, im Bereich von 0,1 bis 1,4 Mol-%; und
   b) 5,0 bis 45,0 Gew.-%, bezogen auf das Gesamtgewicht der monophasischen Polypropylenzusammensetzung (PC), einer Propylenhomopolymerzusammensetzung (H-PP), umfassend eine Reaktormischung aus einem Propylenhomopolymer und einem polymeren Nukleierungsmittel, das in einer Menge im Bereich von 20 bis 300 Gew.-ppm, bezogen auf das Gesamtgewicht der Propylenhomopolymerzusammensetzung (H-PP), vorhanden ist, wobei die Propylenhomopolymerzusammensetzung (H-PP) eine Schmelzefließrate ($MFR_2$), gemessen gemäß ISO 1133 bei 230°C und 2,16 kg, im Bereich von 10 bis 100 g/10 min aufweist und frei von 2,1-Regiodefekten ist, wie bestimmt durch $^{13}C$-NMR-Spektroskopie;
   wobei das kombinierte Gewicht des statistischen Copolymers von Propylen (R-PP) und der Propylenhomopolymerzusammensetzung (H-PP) mindestens 95 Gew.-%, bezogen auf das Gesamtgewicht der monophasischen Polypropylenzusammensetzung (PC), beträgt und
   das polymere Nukleierungsmittel ein Monomer (I) der allgemeinen Formel umfasst

   $$H_2C=CH-CHR^1R^2 \qquad (I)$$

   wobei $R^1$ und $R^2$ entweder einzelne Alkylgruppen mit einem oder mehreren Kohlenstoffatomen sind oder einen gegebenenfalls substituierten gesättigten, ungesättigten oder aromatischen Ring oder ein kondensiertes Ringsystem, das 4 bis 20 Kohlenstoffatome enthält, bilden, wobei im Falle, dass $R^1$ und $R^2$ einen aromatischen Ring bilden, das Wasserstoffatom der $-CHR^1R^2$-Einheit nicht vorhanden ist.

2. Monophasische Polypropylenzusammensetzung (PC) nach Anspruch 1 oder Anspruch 2, wobei das Monomer (I) des polymeren Nukleierungsmittels aus der Gruppe ausgewählt ist, bestehend aus Vinylcyclohexan, Vinylcyclopentan und 4-Methylpent-1-en, wobei das Monomer besonders bevorzugt Vinylcyclohexan ist.

3. Monophasische Polypropylenzusammensetzung (PC) nach einem der vorangehenden Ansprüche, wobei die monophasische Polypropylenzusammensetzung (PC) keine Glasübergangstemperatur unter -30°C, bevorzugter keine Glasübergangstemperatur unter -25°C, besonders bevorzugt keine Glasübergangstemperatur unter -20°C aufweist.

4. Monophasische Polypropylenzusammensetzung (PC) nach einem der vorangehenden Ansprüche, wobei die monophasische Polypropylenzusammensetzung (PC) 60,0 bis 90,0 Gew.-% des statistischen Propylencopolymers (R-PP), 10,0 bis 40,0 der Propylenhomopolymerzusammensetzung (H-PP) umfasst, bevorzugter die monophasische Polypropylenzusammensetzung (PC) 65,0 bis 80,0 Gew.-% des statistischen Propylencopolymers (R-PP), 20,0 bis 35,0 der Propylenhomopolymerzusammensetzung (H-PP) umfasst.

5. Monophasische Polypropylenzusammensetzung (PC) nach einem der vorangehenden Ansprüche, wobei die Propylenhomopolymerzusammensetzung (H-PP) einen in kaltem Xylol löslichen Gehalt (XCS), wie bestimmt bei 25°C gemäß ISO 16152, im Bereich von 0,5 bis 4,0 Gew.-%, bevorzugter im Bereich von 1,0 bis 3,0 Gew.-%, besonders bevorzugt im Bereich von 1,5 bis 2,0 Gew.-%, aufweist und/oder
   wobei das statistische Propylencopolymer (R-PP) einen in kaltem Xylol löslichen Gehalt (XCS), wie bestimmt bei 25°C gemäß ISO 16152, im Bereich von 0,5 bis 15,0 Gew.-%, bevorzugter im Bereich von 0,6 bis 8,0 Gew.-%, besonders bevorzugt im Bereich von 0,7 bis 3,0 Gew.-% aufweist.

6. Monophasische Polypropylenzusammensetzung (PC) nach einem der vorangehenden Ansprüche mit einem Gesamtcomonomergehalt C(PC), wie bestimmt durch quantitative $^{13}C$-NMR-Spektroskopie, im Bereich von 0,5 bis 4,0 Mol-%, bevorzugter im Bereich von 0,7 bis 3,5 Mol-%, besonders bevorzugt im Bereich von 0,9 bis 3,0 Mol-%.

7. Monophasische Polypropylenzusammensetzung (PC) nach einem der vorangehenden Ansprüche, wobei die Propylenhomopolymerzusammensetzung (H-PP) frei von Phthalsäureestern und deren Zersetzungsprodukten ist, bevorzugter die monophasische Polypropylenzusammensetzung (PC) frei von Phthalsäureestern und deren Zersetzungsprodukten ist.

**8.** Monophasische Polypropylenzusammensetzung (PC) nach einem der vorangehenden Ansprüche, wobei das statistische Propylencopolymer (R-PP) ein statistisches Propylen-Ethylen-Copolymer mit einem Ethylengehalt im Bereich von 2,0 bis 6,0 Mol-%, bevorzugter im Bereich von 2,5 bis 5,0 Mol-%, besonders bevorzugt im Bereich von 3,0 bis 4,0 Mol-% ist.

**9.** Monophasische Polypropylenzusammensetzung (PC) nach Anspruch 8, wobei das statistische Propylen-Ethylen-Copolymer umfasst:

a) 51,0 bis 75,0 Gew.-%, bezogen auf das Gesamtgewicht des statistischen Propylen-Ethylen-Copolymers, einer ersten statistischen Propylen-Ethylen-Copolymerfraktion (R-PP1) mit einem Ethylengehalt, wie bestimmt durch quantitative $^{13}C$-NMR-Spektroskopie, im Bereich von 2,0 bis 4,0 Mol-%, bevorzugter im Bereich von 2,4 bis 3,6 Mol-%, besonders bevorzugt im Bereich von 2,7 bis 3,3 Mol-%; und
b) 25,0 bis 49,0 Gew.-%, bezogen auf das Gesamtgewicht des statistischen Propylen-Ethylen-Copolymers, einer zweiten statistischen Propylen-Ethylen-Copolymerfraktion (R-PP2) mit einem Ethylengehalt, wie bestimmt durch quantitative $^{13}C$-NMR-Spektroskopie, im Bereich von 3,0 bis 7,0 Mol-%, bevorzugter im Bereich von 4,0 bis 6,0 Mol-%, besonders bevorzugt im Bereich von 4,5 bis 5,5 Mol-%,

wobei das kombinierte Gewicht der ersten und zweiten statistischen Propylen-Ethylen-Copolymerfraktionen (R-PP1+R-PP2) mindestens 95 Gew.-%, bezogen auf das Gesamtgewicht des statistischen Propylen-Ethylen-Copolymers (R-PP), beträgt und das Verhältnis des Ethylengehalts des statistischen Propylen-Ethylen-Copolymers zum Ethylengehalt der ersten statistischen Propylen-Ethylen-Copolymerfraktion, [C2(R-PP)]/[C2(R-PP1)], vorzugsweise im Bereich von 1,10 bis 2,00, bevorzugter im Bereich von 1,15 bis 1,70, besonders bevorzugt im Bereich von 1,20 bis 1,40 liegt.

**10.** Monophasische Polypropylenzusammensetzung (PC) nach einem der Ansprüche 1 bis 8, wobei das statistische Propylencopolymer (R-PP) ein statistisches Copolymer von Propylen und einem Comonomer, ausgewählt aus $C_4$- bis $C_8$-alpha-Olefinen, bevorzugter ein statistisches Copolymer von Propylen und 1-Hexen, ist, mit einem Comonomergehalt, wie bestimmt durch quantitative $^{13}C$-NMR-Spektroskopie, im Bereich von 0,5 bis 3,0 Mol-%, bevorzugter im Bereich von 0,8 bis 2,0 Mol-%, besonders bevorzugt im Bereich von 1,0 bis 1,5 Mol-%.

**11.** Monophasische Polypropylenzusammensetzung (PC) nach Anspruch 10, wobei das statistische Copolymer von Propylen und einem Comonomer, ausgewählt aus $C_4$- bis $C_8$-alpha-Olefinen, bevorzugter das statistische Copolymer aus Propylen und 1-Hexen, umfasst:

a) 25,0 bis 45,0 Gew.-%, bezogen auf das Gesamtgewicht des statistischen Propylencopolymers, einer ersten statistischen Propylencopolymerfraktion (R-PP1) mit einem Comonomergehalt, wie bestimmt durch quantitative $^{13}C$-NMR-Spektroskopie, im Bereich von 0,1 bis 1,0 Mol-%, bevorzugter im Bereich von 0,3 bis 0,9 Mol-%, besonders bevorzugt im Bereich von 0,5 bis 0,8 Mol-%; und
b) 55,0 bis 75,0 Gew.-%, bezogen auf das Gesamtgewicht des statistischen Propylencopolymers, einer zweiten statistischen Propylencopolymerfraktion (R-PP2) mit einem Comonomergehalt, wie bestimmt durch quantitative $^{13}C$-NMR-Spektroskopie, im Bereich von 1,0 bis 4,0 Mol-%, bevorzugter im Bereich von 1,3 bis 3,0 Mol-%, besonders bevorzugt im Bereich von 1,5 bis 2,0 Mol-%,

wobei das kombinierte Gewicht der ersten und zweiten statistischen Propylen-Copolymerfraktionen (R-PP1+R-PP2) mindestens 95 Gew.-%, bezogen auf das Gesamtgewicht des statistischen Propylencopolymers (R-PP), beträgt und das Verhältnis des Comonomergehalts des statistischen Propylencopolymers zum Comonomergehalt der ersten statistischen Propylencopolymerfraktion, [C(R-PP)]/[C(R-PP1)], vorzugsweise im Bereich von 1,5 bis 3,0, bevorzugter im Bereich von 1,8 bis 2,7, besonders bevorzugt im Bereich von 2,0 bis 2,5 liegt.

**12.** Monophasische Polypropylenzusammensetzung (PC) nach einem der vorangehenden Ansprüche, wobei die Propylenhomopolymerzusammensetzung (H-PP) eine der folgenden Eigenschaften, vorzugsweise beide, aufweist:

i) eine Schmelztemperatur $T_m$ im Bereich von 160 bis 175°C, bevorzugter im Bereich von 162 bis 172°C, besonders bevorzugt im Bereich von 164 bis 169°C; und

ii) eine Kristallisationstemperatur $T_c$ im Bereich von 125 bis 135°C, bevorzugter im Bereich von 127 bis 133°C, besonders bevorzugt im Bereich von 128 bis 132°C;
wobei sowohl $T_m$ als auch $T_c$ durch Dynamische Differenz-Kalorimetrie (DSC) gemäß ISO 11357/Teil 3/Methode C2 in einem Heiz-/Kühl-/Heizzyklus mit einer Abtastrate von 10°C/min im Temperaturbereich von -30 bis +225°C bestimmt werden, und/oder
wobei das statistische Propylencopolymer (R-PP) eine der folgenden Eigenschaften, vorzugsweise beide, aufweist:

i) eine Schmelztemperatur $T_m$ im Bereich von 132 bis 144°C, bevorzugter im Bereich von 134 bis 142°C, besonders bevorzugt im Bereich von 136 bis 140°C; und
ii) eine Kristallisationstemperatur $T_c$ im Bereich von 95 bis 105°C, bevorzugter im Bereich von 97 bis 103°C, besonders bevorzugt im Bereich von 98 bis 102°C;

wobei sowohl $T_m$ als auch $T_c$ durch Dynamische Differenz-Kalorimetrie (DSC) gemäß ISO 11357/Teil 3/Methode C2 in einem Heiz-/Kühl-/Heizzyklus mit einer Abtastrate von 10°C/min im Temperaturbereich von -30 bis +225°C bestimmt werden.

**13.** Monophasische Polypropylenzusammensetzung (PC) nach einem der vorangehenden Ansprüche, die mindestens eine der folgenden Eigenschaften, vorzugsweise beide, aufweist:

i) einen Biegemodul, bestimmt gemäß ISO 178 an 80x10x4 $mm^3$ Probestäben, die gemäß ISO 19069-2 spritzgegossen wurden, im Bereich von 1100 bis 1900 MPa, bevorzugter im Bereich von 1200 bis 1700 MPa, besonders bevorzugt im Bereich von 1320 bis 1500 MPa; und
ii) einen Trübungswert, bestimmt an Platten mit den Abmessungen 60x60x3 $mm^3$, die aus spritzgegossenen Platten hergestellt und gemäß ASTM D1003 gemessen wurden, im Bereich von 5 bis 30 %, bevorzugter im Bereich von 10 bis 28 %, besonders bevorzugt im Bereich von 15 bis 26 %.

**14.** Monophasische Polypropylenzusammensetzung (PC) nach einem der vorangehenden Ansprüche mit mindestens zwei beobachtbaren Schmelzpeaks in einer Dynamischen Differenz-Kalorimetrie (DSC)-Kurve gemäß ISO 11357/Teil 3/Methode C2 in einem Heiz-/Kühl-/Heizzyklus mit einer Abtastrate von 10°C/min im Temperaturbereich von -30 bis +225°C, wobei die monophasische Polypropylenzusammensetzung eine erste Schmelztemperatur $T_{m1}$, eine erste Schmelzwärme $H_{m1}$, eine zweite Schmelztemperatur $T_{m2}$ und eine zweite Schmelzwärme $H_{m2}$ aufweist, von denen mindestens eine, vorzugsweise alle, in die folgenden Bereiche fallen:

i) eine erste Schmelztemperatur $T_{m1}$ im Bereich von 145 bis 159°C, bevorzugter im Bereich von 150 bis 159°C, besonders bevorzugt im Bereich von 154 bis 159°C;
ii) eine erste Schmelzwärme $H_{m1}$ im Bereich von 20 bis 100 J/g, bevorzugter im Bereich von 50 bis 97 J/g, besonders bevorzugt im Bereich von 80 bis 95 J/g;
iii) eine zweite Schmelztemperatur $T_{m2}$ im Bereich von 125 bis 136°C, bevorzugter im Bereich von 128 bis 136°C, besonders bevorzugt im Bereich von 130 bis 135°C; und
iv) eine zweite Schmelzwärme $H_{m2}$ im Bereich von 2,0 bis 70 J/g, bevorzugter im Bereich von 2,0 bis 40 J/g, besonders bevorzugt im Bereich von 2,0 bis 10 J/g.

**15.** Gegenstand, umfassend die monophasische Polypropylenzusammensetzung (PC) nach einem der vorangehenden Ansprüche in einer Menge im Bereich von 90 bis 100 Gew.-%, bevorzugter im Bereich von 95 bis 100 Gew.-%, noch bevorzugter im Bereich von 98 bis 100 Gew.-%, wobei der Gegenstand vorzugsweise ausgewählt ist aus der Gruppe, bestehend aus Spritzgussgegenständen, thermogeformten Gegenständen und Folien.

## Revendications

**1.** Composition de polypropylène monophasique (PC), ayant un indice de fusion ($MFR_2$), mesuré selon ISO 1133 à 230 °C et 2,16 kg, dans la plage de 1,0 à 50,0 g/10 min, dans laquelle la composition de polypropylène monophasique (PC) comprend :

a) 55,0 à 95,0 % en poids, par rapport au poids total de la composition de polypropylène monophasique (PC), d'un copolymère statistique de propylène (R-PP) et d'au moins un comonomère choisi parmi de l'éthylène et des alpha-oléfines en $C_4$ à $C_8$, ayant un indice de fusion ($MFR_2$), mesuré selon ISO 1133 à 230 °C et 2,16 kg,

dans la plage de 1,0 à 30,0 g/10 min, une teneur en comonomère, telle que déterminée par spectroscopie quantitative RMN $^{13}C$, dans la plage de 0,5 à 6,0 % en mole, et une teneur en 2,1-régiodéfauts telle que déterminée par spectroscopie RMN $^{13}C$ dans la plage de 0,1 à 1,4 % en mole ; et
b) 5,0 à 45,0 % en poids, par rapport au poids total de la composition de polypropylène monophasique (PC), d'une composition d'homopolymère de propylène (H-PP), comprenant un mélange en réacteur d'un homopolymère de propylène et d'un agent de nucléation polymère qui est présent en une quantité dans la plage de 20 à 300 ppm en poids, par rapport au poids total de la composition d'homopolymère de propylène (H-PP), dans laquelle la composition d'homopolymère de propylène (H-PP) a un indice de fusion ($MFR_2$), mesuré selon ISO 1133 à 230 °C et 2,16 kg, dans la plage de 10 à 100 g/10 min et est exempte de 2,1-régiodéfauts comme déterminé par spectroscopie RMN $^{13}C$ ;
dans laquelle le poids combiné du copolymère statistique de propylène (R-PP) et de la composition d'homopolymère de propylène (H-PP) est d'au moins 95 % en poids, par rapport au poids total de la composition de polypropylène monophasique (PC), et
l'agent de nucléation polymère comprend un monomère (I) de formule générale

$$H_2C=CH-CHR^1R^2 \qquad (I)$$

dans laquelle $R^1$ et $R^2$ sont des groupes alkyle individuels avec un ou plusieurs atomes de carbone ou forment un cycle saturé, insaturé ou aromatique optionnellement substitué ou un système de cycles fusionnés contenant 4 à 20 atomes de carbone, dans le cas où $R^1$ et $R^2$ forment un cycle aromatique, l'atome d'hydrogène du fragment $-CHR^1R^2$ n'étant ainsi pas présent.

**2.** Composition de polypropylène monophasique (PC) selon la revendication 1 ou la revendication 2, dans laquelle le monomère (I) de l'agent de nucléation polymère est choisi dans le groupe constitué de vinylcyclohexane, vinylcyclopentane et 4-méthylpent-1-ène, de manière la plus préférée le monomère est le vinylcyclohexane.

**3.** Composition de polypropylène monophasique (PC) selon l'une des revendications précédentes, dans laquelle la composition de polypropylène monophasique (PC) n'a pas de température de transition vitreuse inférieure à -30 °C, de préférence n'a pas de température de transition vitreuse inférieure à -25 °C, de manière la plus préférée n'a pas de température de transition vitreuse inférieure à -20 °C.

**4.** Composition de polypropylène monophasique (PC) selon l'une des revendications précédentes, dans laquelle la composition de polypropylène monophasique (PC) comprend 60,0 à 90,0 % en poids du copolymère statistique de propylène (R-PP), 10,0 à 40,0 de la composition d'homopolymère de propylène (H-PP), de préférence la composition de polypropylène monophasique (PC), comprend 65,0 à 80,0 % en poids du copolymère statistique de propylène (R-PP), 20,0 à 35,0 de la composition d'homopolymère de propylène (H-PP).

**5.** Composition de polypropylène monophasique (PC) selon l'une des revendications précédentes, dans laquelle la composition d'homopolymère de propylène (H-PP) a une teneur en xylène soluble à froid (XCS), telle que déterminée à 25 °C selon ISO 16152, dans la plage de 0,5 à 4,0 % en poids, de préférence dans la plage de 1,0 à 3,0 % en poids, de manière la plus préférée dans la plage de 1,5 à 2,0 % en poids, et/ou
dans laquelle le copolymère statistique de propylène (R-PP) a une teneur en xylène soluble à froid (XCS), telle que déterminée à 25 °C selon ISO 16152, dans la plage de 0,5 à 15,0 % en poids, de préférence dans la plage de 0,6 à 8,0 % en poids, de manière la plus préférée dans la plage de 0,7 à 3,0 % en poids.

**6.** Composition de polypropylène monophasique (PC) selon l'une des revendications précédentes, ayant une teneur totale en comonomère C(PC), telle que déterminée par spectroscopie quantitative RMN $^{13}C$, dans la plage de 0,5 à 4,0 % en mole, de préférence dans la plage de 0,7 à 3,5 % en mole, de manière la plus préférée dans la plage de 0,9 à 3,0 % en mole.

**7.** Composition de polypropylène monophasique (PC) selon l'une des revendications précédentes, dans laquelle la composition d'homopolymère de propylène (H-PP) est exempte d'esters phtaliques et de leurs produits de décomposition, de préférence la composition de polypropylène monophasique (PC) est exempte d'esters phtaliques et de leurs produits de décomposition.

**8.** Composition de polypropylène monophasique (PC) selon l'une des revendications précédentes, dans laquelle le copolymère statistique de propylène (R-PP) est un copolymère statistique propylène-éthylène ayant une teneur en éthylène dans la plage de 2,0 à 6,0 % en mole, de préférence dans la plage de 2,5 à 5,0 % en mole, de manière

la plus préférée dans la plage de 3,0 à 4,0 % en mole.

9. Composition de polypropylène monophasique (PC) selon la revendication 8, dans laquelle le copolymère statistique propylène-éthylène comprend :

   a) 51,0 à 75,0 % en poids, par rapport au poids total du copolymère statistique propylène-éthylène, d'une première fraction de copolymère statistique propylène-éthylène (R-PP1) ayant une teneur en éthylène, telle que déterminée par spectroscopie quantitative RMN $^{13}C$, dans la plage de 2,0 à 4,0 % en mole, de préférence dans la plage de 2,4 à 3,6 % en mole, de manière la plus préférée dans la plage de 2,7 à 3,3 % en mole ; et
   b) 25,0 à 49,0 % en poids, par rapport au poids total du copolymère statistique propylène-éthylène, d'une seconde fraction de copolymère statistique propylène-éthylène (R-PP2) ayant une teneur en éthylène, telle que déterminée par spectroscopie quantitative RMN $^{13}C$, dans la plage de 3,0 à 7,0 % en mole, de préférence dans la plage de 4,0 à 6,0 % en mole, de manière la plus préférée dans la plage de 4,5 à 5,5 % en mole,

   dans laquelle le poids combiné des première et seconde fractions de copolymère statistique propylène-éthylène (R-PP1 + R-PP2) est d'au moins 95 % en poids, par rapport au poids total du copolymère statistique propylène-éthylène (R-PP) et le rapport entre la teneur en éthylène du copolymère statistique propylène-éthylène et la teneur en éthylène de la première fraction de copolymère statistique propylène-éthylène, [C2(R-PP)]/[C2(R-PP1)], est de préférence dans la plage de 1,10 à 2,00, de préférence dans la plage de 1,15 à 1,70, de manière la plus préférée dans la plage de 1,20 à 1,40.

10. Composition de polypropylène monophasique (PC) selon l'une des revendications 1 à 8, dans laquelle le copolymère statistique de propylène (R-PP) est un copolymère statistique de propylène et d'un comonomère choisi parmi des alpha-oléfines en $C_4$ à $C_8$, de préférence un copolymère statistique de propylène et de 1-hexène, ayant une teneur en comonomère, telle que déterminée par spectroscopie quantitative RMN $^{13}C$, dans la plage de 0,5 à 3,0 % en mole, de préférence dans la plage de 0,8 à 2,0 % en mole, de manière la plus préférée dans la plage de 1,0 à 1,5 % en mole.

11. Composition de polypropylène monophasique (PC) selon la revendication 10, 1, dans laquelle le copolymère statistique de propylène et d'un comonomère choisi parmi des alpha-oléfines en $C_4$ à $C_8$, de préférence le copolymère statistique de propylène et de 1-hexène, comprend :

   a) 25,0 à 45,0 % en poids, par rapport au poids total du copolymère statistique de propylène, d'une première fraction de copolymère statistique de propylène (R-PP1) ayant une teneur en comonomère, telle que déterminée par spectroscopie quantitative RMN $^{13}C$, dans la plage de 0,1 à 1,0 % en mole, de préférence dans la plage de 0,3 à 0,9 % en mole, de manière la plus préférée dans la plage de 0,5 à 0,8 % en mole ; et
   b) 55,0 à 75,0 % en poids, par rapport au poids total du copolymère statistique de propylène, d'une seconde fraction de copolymère statistique de propylène (R-PP2) ayant une teneur en comonomère, telle que déterminée par spectroscopie quantitative RMN $^{13}C$, dans la plage de 1,0 à 4,0 % en mole, de préférence dans la plage de 1,3 à 3,0 % en mole, de manière la plus préférée dans la plage de 1,5 à 2,0 % en mole,

   dans laquelle le poids combiné des première et seconde fractions de copolymère statistique de propylène (R-PP1 + R-PP2) est d'au moins 95 % en poids, par rapport au poids total du copolymère statistique de propylène (R-PP) et le rapport entre la teneur en comonomère du copolymère statistique de propylène et la teneur en comonomère de la première fraction de copolymère statistique de propylène, [C(R-PP)]/[C(R-PP1)], est de préférence dans la plage de 1,5 à 3,0, de préférence dans la plage de 1,8 à 2,7, de manière la plus préférée dans la plage de 2,0 à 2,5.

12. Composition de polypropylène monophasique (PC) selon l'une des revendications précédentes, dans laquelle la composition d'homopolymère de propylène (H-PP) possède l'une des propriétés suivantes, de préférence les deux :

   i) une température de fusion $T_m$ dans la plage de 160 à 175 °C, de préférence dans la plage de 162 à 172 °C, de manière la plus préférée dans la plage de 164 à 169 °C ; et
   ii) une température de cristallisation $T_c$ dans la plage de 125 à 135 °C, de préférence dans la plage de 127 à 133 °C, de manière la plus préférée dans la plage de 128 à 132 °C ;
   dans laquelle $T_m$ et $T_c$ sont toutes deux déterminées par calorimétrie différentielle à balayage (DSC) selon ISO 11357/partie 3/méthode C2 dans un cycle de chaleur/froid/chaleur avec une vitesse de balayage de 10 °C/min dans la plage de température de -30 à +225 °C, et/ou
   dans laquelle le copolymère statistique de propylène (R-PP) possède l'une des propriétés suivantes, de préférence les deux :

i) une température de fusion $T_m$ dans la plage de 132 à 144 °C, de préférence dans la plage de 134 à 142 °C, de manière la plus préférée dans la plage de 136 à 140 °C ; et
ii) une température de cristallisation $T_c$ dans la plage de 95 à 105 °C, de préférence dans la plage de 97 à 103 °C, de manière la plus préférée dans la plage de 98 à 102 °C ;

dans laquelle $T_m$ et $T_c$ sont toutes deux déterminées par calorimétrie différentielle à balayage (DSC) selon ISO 11357/partie 3/méthode C2 dans un cycle de chaleur / froid/ chaleur avec une vitesse de balayage de 10 °C/min dans la plage de température de -30 à +225 °C.

**13.** Composition de polypropylène monophasique (PC) selon l'une des revendications précédentes, présentant au moins l'une des caractéristiques suivantes, de préférence les deux :

i) un module de flexion, déterminé selon ISO 178 sur des barres d'essai de 80x10x4 $mm^3$ moulées par injection selon ISO 19069-2, dans la plage de 1100 à 1900 MPa, de préférence dans la plage de 1200 à 1700 MPa, de manière la plus préférée dans la plage de 1320 à 1500 MPa ; et
ii) une valeur de voile, déterminée sur des plaques de dimensions $60 \times 60 \times 3$ $mm^3$ usinées à partir de plaques moulées par injection et mesurée selon ASTM D1003, dans la plage de 5 à 30 %, de préférence dans la plage de 10 à 28 %, de manière la plus préférée dans la plage de 15 à 26 %.

**14.** Composition de polypropylène monophasique (PC) selon l'une des revendications précédentes, présentant au moins deux pics de fusion observables dans une courbe de calorimétrie différentielle à balayage (DSC), selon ISO 11357/partie 3/méthode C2 dans un cycle chaud/froid/chaud avec une vitesse de balayage de 10 °C/min dans la plage de température de -30 à +225 °C, dans laquelle la composition de polypropylène monophasique a une première température de fusion $T_{m1}$, une première chaleur de fusion $H_{m1}$, une seconde température de fusion $T_{m2}$, et une seconde chaleur de fusion $H_{m2}$, dont au moins une, de préférence la totalité, se situe dans les plages suivantes :

i) une première température de fusion $T_{m1}$ dans la plage de 145 à 159 °C, de préférence dans la plage de 150 à 159 °C, de manière la plus préférée dans la plage de 154 à 159 °C ;
ii) une première chaleur de fusion $H_{m1}$ dans la plage de 20 à 100 J/g, de préférence dans la plage de 50 à 97 J/g, de manière la plus préférée dans la plage de 80 à 95 J/g ;
iii) une seconde température de fusion $T_{m2}$ dans la plage de 125 à 136 °C, de préférence dans la plage de 128 à 136 °C, de manière la plus préférée dans la plage de 130 à 135 °C ; et
iv) une seconde chaleur de fusion $H_{m2}$ dans la plage de 2,0 à 70 J/g, de préférence dans la plage de 2,0 à 40 J/g, de manière la plus préférée dans la plage de 2,0 à 10 J/g.

**15.** Article comprenant la composition de polypropylène monophasique (PC) selon l'une des revendications précédentes, selon une quantité dans la plage de 90 à 100 % en poids, de préférence dans la plage de 95 à 100 % en poids, encore plus de préférence dans la plage de 98 à 100 % en poids, dans lequel l'article est choisi de préférence dans le groupe constitué d'articles moulés par injection, d'articles thermoformés et de films.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- EP 2535372 A1
- EP 887379 A
- EP 887380 A
- EP 887381 A
- EP 991684 A
- EP 0887379 A
- WO 9212182 A
- WO 2004000899 A
- WO 2004111095 A
- WO 9924478 A
- WO 9924479 A
- WO 0068315 A
- WO 2007116034 A
- WO 200202576 A
- WO 2011135004 A
- WO 2012084961 A
- WO 2012001052 A
- WO 2011076780 A
- WO 2015158790 A
- WO 2018122134 A
- WO 2019179959 A
- WO 9414856 A
- WO 9512622 A
- WO 2006097497 A
- WO 2013007650 A
- WO 2012007430 A
- EP 2610271 A
- EP 261027 A
- EP 2610272 A
- EP 1028984 A
- WO 006831 A
- WO 2020245251 A1
- WO 2019179959 A1
- WO 2017148970 A1


### Non-patent literature cited in the description


- **HANS ZWEIFEL.** Plastic Additives Handbook. 2001, 871-873
- **BUSICO, V. ; CIPULLO, R.** *Prog. Polym. Sci.,* 2001, vol. 26, 443
- **BUSICO, V ; CIPULLO, R. ; MONACO, G. ; VACATELLO, M. ; SEGRE, A.L.** *Macromolecules,* 1997, vol. 30, 6251
- **ZHOU, Z. ; KUEMMERLE, R ; QIU, X. ; REDWINE, D. ; CONG, R. ; TAHA, A. ; BAUGH, D. ; WINNIFORD, B.** *J. Mag. Reson.,* 2007, vol. 187, 225
- **BUSICO, V. ; CARBONNIERE, P. ; CIPULLO, R. ; PELLECCHIA, R. ; SEVERN, J. ; TALARICO, G.** *Macromol. Rapid Commun.,* 2007, vol. 28, 11289
- **RESCONI, L. ; CAVALLO, L. ; FAIT, A. ; PIEMONTESI, F.** *Chem. Rev.,* 2000, vol. 100, 1253
- **WANG, W-J. ; ZHU, S.** *Macromolecules,* 2000, vol. 33, 1157
- **CHENG, H. N.** *Macromolecules,* 1984, vol. 17, 1950
- **BUSICO, V. ; CIPULLO, R. ; MONACO, G. ; VACATELLO, M. ; SEGRE, A.L.** *Macromolecules,* 1997, vol. 30, 6251